# EUROPÄISCHE PATENTSCHRIFT

(11) **EP 1 079 306 B1**
(45) Veröffentlichungstag und Bekanntmachung des Hinweises auf die Patenterteilung: **24.06.2009**
(21) Anmeldenummer: 00117017.4
(22) Anmeldetag: 08.08.2000
(51) Int. Cl.: G06F 11/36

(54) **Verfahren zum Testen eines Programmsystems sowie zugehörige Datenverarbeitungsanlage und zugehöriges Programm**
Method for testing a programming system and data processing system and program to be used therefore
Méthode pour tester un système de programmation et unité de traitement de données et programme correspondants

(30) Priorität: 25.08.1999 DE 19940306
(43) Veröffentlichungstag der Anmeldung: 28.02.2001
(73) Patentinhaber: Fujitsu Siemens Computers GmbH, 80807 München (DE)
(72) Erfinder: Greese, Florian, 81825 München (DE)
(74) Vertreter: Epping - Hermann - Fischer

(56) Entgegenhaltungen:
- KRAMER J ET AL: "Analysing dynamic change in distributed software architectures" IEE PROCEEDINGS: SOFTWARE, IEE, STEVENAGE, GB, Bd. 145, Nr. 5, 26. Oktober 1998 (1998-10-26), Seiten 146-154, XP006011475 ISSN: 1462-5970
- FEATHER M S: "RAPID APPLICATION OF LIGHTWEIGHT FORMAL METHODS FOR CONSISTENCY ANALYSES" IEEE TRANSACTIONS ON SOFTWARE ENGINEERING, IEEE INC. NEW YORK, US, Bd. 24, Nr. 11, November 1998 (1998-11), Seiten 949-959, XP000850342 ISSN: 0098-5589

## Beschreibung

Die Erfindung betrifft ein Verfahren zum Testen eines Programmsystems, bei dem in einem digitalen Datenspeicher gespeicherte Befehle einer Beschreibungssprache den Datenfluß zwischen Programmbausteinen des Programmsystems beschreiben. Im Datenspeicher ist für die Dateneingänge und die Datenausgänge eines Programmbausteins jeweils mindestens ein Vorgabezeichen gespeichert, das eine Eigenschaft der beim Ausführen der Befehle des Programmbausteins bearbeiteten oder erzeugten Daten bezeichnet.

Bekannt sind grafische Programmierwerkzeuge bzw. textorientierte Programmierwerkzeuge, bei denen die Programmbausteine Unterprogramme sind. Ein Übersetzungswerkzeug, das Teil des Programmierwerkzeugs ist, prüft Befehle, welche die Art der bearbeiteten Daten betreffen auf syntaktische Richtigkeit, d.h. daraufhin, ob die Regeln der Programmiersprache eingehalten worden sind.

Die von einem Programmbaustein bearbeiteten Daten werden bei einer grafischen Benutzeroberfläche als Eingangsdaten für diesen Programmbaustein dargestellt. Somit kann auch von einem Dateneingang am Programmbaustein gesprochen werden. Die vom Programmbaustein erzeugten Daten werden bei einem grafisch orientierten Programmierwerkzeug als Daten an Datenausgängen des Programmbausteins dargestellt. Deshalb soll im folgenden von einem Datenausgang des Programmbausteins gesprochen werden.

Bekannte Übersetzungswerkzeuge, z.B. Compiler, prüfen beispielsweise als Kriterium den Datentyp, der für die Daten an einem Dateneingang eines Programmbausteins festgelegt wird. Weicht dieser Datentyp von einem vorgeschriebenen Datentyp ab, so wird eine Fehlermeldung erzeugt. Überprüft werden nur solche Kriterien, die zum Zeitpunkt der Übersetzung bekannt sind. Kriterien, die erst zur Laufzeit, d.h. zur Zeit des Ausführens der Befehle des Programmierbausteins bekannt sind, werden von bekannten Übersetzungswerkzeugen nicht überprüft. Fehler, die aus der Verletzung solcher Kriterien resultieren, machen sich erst beim Ausführen der Befehle des Programmbausteins bemerkbar. Beispielsweise wird die Ausführung der Befehle dann an einer Stelle unterbrochen, die nicht zwingend mit der Fehlerstelle übereinstimmen muß. Bei anderen Fehlern zeigt sich der Fehler nur indirekt am falschen Ergebnis. In beiden Fällen ist eine zeitaufwendige Fehlersuche notwendig.

Aus "Rapid Application of Lightweight Formal Methods for Consistency Analyses", M.S. Feather, IEEE Transactions on Software Engineering, Vol. 24, Nr. 11, 1998, ist ein Verfahren bekannt, um Schnittstellen von Softwaremodulen, die miteinander über ausgetauschte Nachrichten kommunizieren, zu analysieren. Die Menge der von einem Modul erwarteten und die Menge der von einem Modul ausgehenden Nachrichten sowie die Verknüpfung der Module untereinander wird in einer Datenbank gespeichert. Dann wird für jedes Modul anhand der Verknüpfung der Module untereinander die Menge der bei einem jeden Modul eingehenden Nachrichten ermittelt und mit der Menge der vom jeweiligen Modul erwarteten Nachrichten auf Konsistenz überprüft. So kann beispielsweise ausfindig gemacht werden, ob einem Modul möglicherweise Nachrichten übermittelt werden, die es nicht erwartet und somit auch nicht korrekt interpretieren kann oder ob eine erwartete Nachricht in der Menge der möglicherweise eingehenden Nachrichten gar nicht enthalten ist. Gefundene Inkonsistenzen lassen auf mögliche Programmierfehler schließen. Der Prüfung liegt die Menge der möglichen, ausgetauschten Nachrichten zugrunde, sie berücksichtigt jedoch keine Abhängigkeit der von einem Modul abgegebenen Nachrichten von den eingehenden Nachrichten.

In "Analysing dynamic change in distributed software architectures", J. Kramer et al., IEE.Proceedings: Software, Vol. 145, Nr. 5, 1998, ist ein Verfahren beschrieben, um die Auswirkungen von Änderungen in einem System mit verteilten, redundanten Datenbanken zu simulieren. Bei dem System wird der Datenaustausch zur Synchronisation der Datenbankinhalte bei Änderungen der Verknüpfung der Datenbanken untereinander simuliert, um zu ermitteln, ob auch bei geänderter Struktur des Systems die Datenbankinhalte konsistent gehalten werden können. Die Prüfung bezieht sich jedoch nicht auf Eigenschaften der Daten selbst.

Es ist Aufgabe der Erfindung, ein Verfahren und ein Programm zum Testen eines Programmsystems der eingangs genannten Art anzugeben, mit dem die Konsistenz vorbestimmter Eigenschaften von zwischen den Programmbausteinen ausgetauschten Daten getestet werden kann. Dabei soll das Verfahren nicht auf ablauffähige Programmsysteme beschränkt sein, sondern auch für ein Programmsystem einsetzbar sein, das, z.B. in einer frühen Entwicklungsphase, lediglich durch den Datenfluß zwischen seinen Programmbausteinen beschrieben ist.

Die Aufgabe wird durch die Merkmale der unabhängigen Ansprüche gelöst. Weiterbildungen sind in den Unteransprüchen angegeben.

Die Erfindung geht von der Erkenntnis aus, daß ein Test auch dann möglich ist, wenn zum Zeitpunkt des Tests noch nicht festgelegte Eigenschaften der durch einen Programmbaustein zu bearbeitenden Daten in den Test einbezogen werden. Um trotz der fehlenden Festlegung einen Test zu ermöglichen, wird bei den erfindungsgemäßen Verfahren zunächst jeweils ein Vorgabezeichen für jeden Dateneingang und jeden Datenausgang der Programmbausteine vorgegeben, wobei die Vorgabezeichen Eigenschaften der den Dateneingängen zugeführten Daten oder an den Datenausgängen ausgegebenen Daten durch Eigenschaftswerte angeben, wobei gleiche Eigenschaften an verschiedenen Daten- bzw. Datenausgängen in den entsprechenden Vorgabezeichen durch gleiche Eigenschaftswerte angegeben werden. Die Eigenschaften zeichnen sich dadurch aus, dass für sie erst beim Ausführen der Befehle des Programmsystems ein konkreter Wert angegeben werden kann. Weiter werden Prüfzeichen an solchen Dateneingängen, die aus dem.Programmsystem herausgeführt sind, vorgegeben, wobei die Prüfzeichen die Eigenschaften der beim Ausführen der Programmbausteine den Dateneingängen zugeführten Daten oder der an den Datenausgängen ausgegebenen Daten durch Eigenschaftswerte angeben. Auch hier werden gleiche Eigenschaften an verschiedenen Daten- bzw. Datenausgängen durch gleiche Eigenschaftswerte angegeben. Für alle Programmbausteine mit Prüfzeichen an den Dateneingängen werden dann für die Datenausgänge dieser Programmbausteine Prüfzeichen automatisch vergeben, wobei in den vergebenen Prüfzeichen für Datenausgänge der Eigenschaftswert gleich dem entsprechenden Eigenschaftswert im Prüfzeichen eines der Dateneingänge gesetzt wird, wenn in den Vergabezeichen dieser Datenausgänge und dieses Dateneingangs die entsprechenden Eigenschaftswerte übereinstimmen und wobei andernfalls in den vergebenen Prüfzeichen für alle weiteren Datenausgänge davon abweichende und untereinander unterschiedliche Eigenschaftswerte vergeben werden. Prüfzeichen, die für Datenausgänge ermittelt wurden, werden als Prüfzeichen für die Dateneingänge nachgeschalteter Programmbausteine übernommen. Falls die nachgeschalteten Programmbausteine mehr als einen Dateneingang aufweisen, wird überprüft, ob die Vorgabezeichen an den Dateneingängen gleiche Eigenschaftswerte aufweisen und, falls dem so ist, wird überprüft, ob die Prüfzeichen an diesen Dateneingängen ebenfalls gleiche Werte für die entsprechende Eigenschaften aufweisen. Die Eigenschaften werden also nicht isoliert für jeden Dateneingang überprüft, sondern durch Vergleich der Prüfzeichen an verschiedenen Eingängen eines Programmbausteins. Falls die Prüfzeichen keine gleichen Eigenschaftswerte aufweisen, wird ein Hinweis erzeugt. An Hand des Hinweises kann frühzeitig, d.h. noch vor der Ausführung der Befehle des Programmbausteins, ein Fehlerfall erkannt werden. Somit entfällt für den betreffenden Verstoß eine spätere intensive Fehlersuche.

Beim erfindungsgemäßen Verfahren werden in den Vorgabekennzeichen Annahmen über die Art der beim Ausführen der Befehle des Programmbausteins bearbeiteten oder erzeugten Daten getroffen. Beim Ermitteln der Prüfzeichen für die Eingänge eines Programmbausteins werden ebenfalls Annahmen getroffen. Mit Hilfe der Prüfregeln wird überprüft, ob die getroffenen Annahmen eingehalten werden. Somit kann zwar nicht die Eigenschaft bzw. der Wert der zu bearbeitenden Daten direkt geprüft werden, es lassen sich aber durch den Vergleich der Prüfzeichen Aussagen darüber ableiten, ob die Annahmen durch das Programmsystem erfüllt werden.

Das erfindungsgemäße Verfahren kann nicht nur durch Vergleich der Prüfzeichen verschiedener Eingänge sondern auch durch den Vergleich der Prüfzeichen an verschiedenen Ausgängen durchgeführt werden. Die Prüfzeichen an den verschiedenen Ausgängen des Programmbausteins werden unter Einbeziehungen der für diese Ausgänge des Programmbausteins festgelegten Vorgabezeichen ebenfalls nach einer vorgegebenen Prüfregel miteinander verglichen.

Die Vorgabezeichen eines Teils der Programmbausteine werden von einer Bedienperson eingegeben. Die Eingaben der Bedienperson erlauben es, sehr präzise Annahmen für den Test zu verwenden. Die Vorgabezeichen des anderen Teils der Programmbausteine werden automatisch erzeugt. Insbesondere wenn keine Angaben über die Funktion eines Programmbausteins zur Verfügung stehen, ist dieser Weg geeignet, um dennoch einen Test durchzuführen. Außerdem gibt es Fälle, in denen vom Programmierer eines Programmbausteins bewußt keine Vorgaben gemacht werden. Es können Tests auch in solchen Fällen durchgeführt werden, bei denen alle Vorgabezeichen von einer Bedienperson eingegeben worden sind.

Sind bei einer Ausgestaltung die Daten Listen mit mehreren Listenelementen des gleichen Datentyps und ist die bezeichnete Eigenschaft die Anzahl der Listenelemente, so muß ein konkreter Wert für die Anzahl der Listenelemente beim Testen noch nicht bekannt sein. Es ist ausreichend, beim Testen die Werte der Vorgabezeichen bzw. der Prüfzeichen als Aussage für eine bestimmte Länge der Liste bzw. für eine bestimmte Anzahl von Listenelementen anzusehen, ohne daß ein Wert angegeben werden muß. Prüfzeichen mit verschiedenen Werten beziehen sich dann auf Listen, die eine voneinander verschiedene Anzahl Listenelemente haben können. Haben Vorgabezeichen denselben Wert, so haben die Listen, auf die sie sich beziehen, auch dieselbe Anzahl von Listenelementen, ohne daß zum Zeitpunkt des Testens bekannt ist, welche konkrete Anzahl, d.h. ob beispielsweise vier oder fünf Listenelemente in jeder Liste enthalten sind. Durch diese Maßnahmen wird frühzeitig verhindert, daß bei der Bearbeitung von Listen mit einer unterschiedlichen Anzahl von Listenelementen Fehler auftreten. Solche Fehler würden beispielsweise auftreten, wenn Listen mit unterschiedlicher Anzahl von Listenelementen addiert werden, wobei jeweils nacheinander zwei Listenelemente addiert werden und die Ergebnisse eine neue Liste bilden. Beim Bearbeiten der letzten Listenelemente bzw. des letzten Listenelementes der längeren Liste gibt es kein Listenelement der kürzeren Liste für die Addition.

Bei einer nächsten Weiterbildung der erfindungsgemäßen Verfahren sind die Daten ebenfalls Listen mit mehreren Listenelementen des gleichen Datentyps. Die bezeichnete Eigenschaft betrifft die Aufrechterhaltung der richtigen Zuordnung der Listenelemente zweier Listen zueinander. Alternativ kennzeichnet bei dieser Weiterbildung die bezeichnete Eigenschaft die Anordnung der Listenelemente innerhalb der Liste. Beim Testen wird geprüft, ob beispielsweise bei einer Aufspaltung der Liste in Listenzweige durch Programmbausteine des Programmsystems und einer späteren Zusammenführung der Listenzweige die Daten wieder den richtigen Listenelementen zugeordnet werden. Fehler werden so vor dem Ausführen der Befehle der Programmbausteine erkannt.

Werden bei einem Ausführungsbeispiel des erfindungsgemäßen Verfahrens die Prüfzeichen für Dateneingänge von Programmbausteinen automatisch vorgegeben, die Dateneingänge des Programmsystems sind, so wird auf einfache Art ein Ausgangspunkt für den Test vorgegeben. Als Annahme bei der Vorgabe der Prüfzeichen muß von dem ungünstigsten Fall ausgegangen werden, daß die Eigenschaften der Daten an den Eingängen verschiedene Werte haben. Deshalb werden für verschiedene Dateneingänge verschiedene Prüfzeichen vorgegeben. Auf gleiche Weise können für Datenausgänge von Programmbausteinen, die Datenausgänge des Programmsystems sind, automatisch Prüfzeichen vorgegeben werden.

Die Prüfzeichen können jedoch auch durch eine Bedienperson vorgegeben werden. Die Bedienperson kann abhängig von der Funktion des Programmbausteins auch gleiche Prüfzeichen für verschiedene Dateneingänge bzw. Datenausgänge vorgeben.

Bei einer anderen Weiterbildung werden Prüfzeichen von Dateneingängen als Prüfzeichen für Datenausgänge bzw. in umgekehrter Richtung von Datenausgängen zu Dateneingängen nur dann übernommen, wenn bei einem vorhergehenden Prüfschritt bezüglich des Prüfzeichens kein Fehler aufgetreten ist. Diese Maßnahme erhöht die Zuverlässigkeit des Testergebnisses.

Bei einer nächsten Weiterbildung des erfindungsgemäßen Verfahrens werden Regeln vorgegeben, die festlegen, wie zu verfahren ist, wenn an Stelle einer Liste am Dateneingang ein einzelnes Datum oder ein einzelner Datensatz bearbeitet werden soll. Alternativ oder zusätzlich wird vorgegeben, wie zu verfahren ist, wenn an Stelle eines einzelnen Datums oder eines einzelnen Datensatzes eine Liste eingegeben werden soll, die Listenelemente vom Datentyp des Datums oder vom Datentyp des Datensatzes hat. Durch diese Vorgehensweise läßt sich eine sogenannte inhärente Listenverarbeitung erreichen. Dabei können Programmbausteine, die eigentlich nur zur Bearbeitung eines einzelnen Datums oder eines einzelnen Datensatzes vorgesehen sind, auch zur Bearbeitung von Listen verwendet werden.

Die Aufgabe wird ebenfalls durch ein Programm mit einer durch einen Prozessor einer Datenverarbeitungsanlage ausführbaren Befehlsfolge gelöst. Die Datenverarbeitungsanlage führt beim Ausführen der Befehlsfolge die erfindungsgemäßen Verfahren oder deren Weiterbildungen aus. Somit gelten die oben angegebenen technischen Wirkungen auch für das Programm.

Im folgenden werden Ausführungsbeispiele der Erfindung an Hand der beiliegenden Zeichnungen erläutert. Darin zeigen:
- Figur 1: eine Vorgabe für einen Programmbaustein mit zwei Dateneingängen und zwei Datenausgängen sowie mit durch eine Bedienperson vorgegebenen Vorgabezeichen,
- Figur 2: eine Vorgabe für einen Programmbaustein mit zwei Dateneingängen und einem Datenausgang sowie mit durch eine Bedienperson vorgegebenen Vorgabezeichen,
- Figur 3: den Datenfluß in einem Programmsystem mit Programmbausteinen gemäß der Figuren 1 und 2,
- Figur 4: eine Vorgabe für einen Programmbaustein mit zwei Dateneingängen und zwei Datenausgängen sowie automatisch vorgegebenen VorgabezeichenFigur 5 den Datenfluß in einem Programmsystem mit Programmbausteinen gemäß der Figuren 4 und 2,
- Figur 6: ein Flußdiagramm mit Verfahrensschritten, die beim Testen des Programmsystems ausgeführt werden,
- Figur 7: Vorgaben für Programmbausteine zum Durchführen von grundlegenden Funktionen für die Listenbearbeitung,
- Figur 8: den Datenfluß in einem fehlerhaften Programmsystem zur Ausführung grundlegender Funktionen der Listenbearbeitung, und
- Figur 9: den Datenfluß in einem Programmsystem zur Ausführung grundlegender Funktionen der Listenbearbeitung, wobei die Programmbausteine fehlerfrei verknüpft sind.

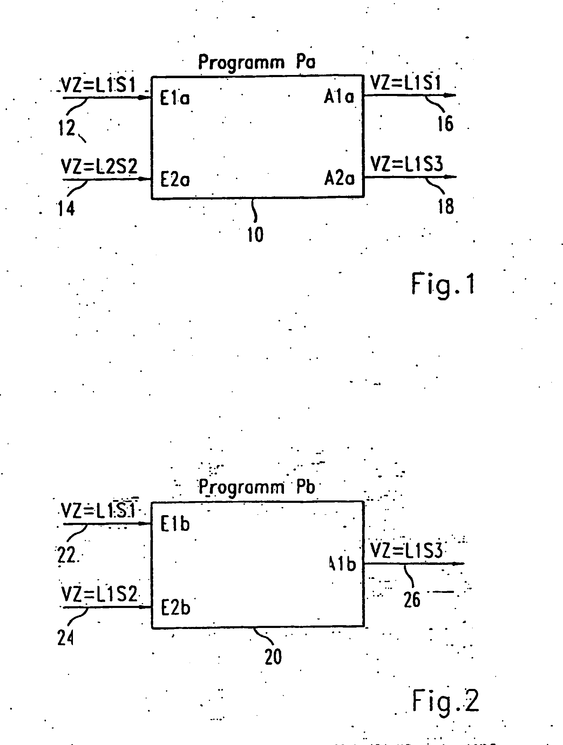

Figur 1 zeigt eine Vorgabe 10 für einen Programmbaustein, der zwei Dateneingänge E1a und E2a und zwei Datenausgänge A1a, A2a hat. Zu den Dateneingängen E1a bzw. E2a führt ein Pfeil 12 bzw. 14 hin. Vom Datenausgang A1a bzw. A2a führt ein Pfeil 16 bzw. 18 weg. Die Vorgabe 10 ist in Figur 1 so dargestellt, wie sie beim Verwenden eines grafisch orientiert arbeitenden Entwicklungswerkzeugs auf dem Bildschirm erscheint, der von einem Computer angesteuert wird. Eine Bedienperson, der die Funktion des durch die Vorgabe 10 erfaßten Programmbausteins bekannt ist, hat für die Dateneingänge E1a und E2a sowie für die Datenausgänge A1a und A2a Vorgabezeichen VZ vorgegeben. Die von der Vorgabe 10 erfaßten Programmbausteine dienen zur Verarbeitung von Listen, die eine bestimmte Anzahl von Listenelementen enthalten. Die genaue Länge einer Liste ist jedoch erst bekannt, wenn die Befehle des Programmbausteins ausgeführt werden. Zum Zeitpunkt des Tests mit dem grafisch orientiert arbeitenden Entwicklungswerkzeug lassen sich über die Längen der Listen nur Annahmen treffen.

Für den Dateneingang E1a wurde ein Vorgabezeichen VZ = L1S1 vorgegeben. Die Vorgabezeichen VZ vereinen jeweils zwei Bestandteile L und S. Der Großbuchstabe L ist ein Bezeichner für die Länge der Liste. Der Großbuchstabe S ist dagegen ein Bezeichner für die Sequenz bzw. Reihenfolge, in der die Listenelemente innerhalb der Liste angeordnet sind. Die Bezeichner L und S werden zur besseren Darstellung verwendet. Bei einem anderen Ausführungsbeispiel werden die Bezeichner L und S nicht verwendet, so daß allein die Reihenfolge der den Bezeichnern L und S folgenden Werte für die Zuordnung zur Länge bzw. zur Sequenz entscheidend ist. Aus dem Vorgabezeichen VZ = L1S1 für den Eingang E1a geht hervor, daß dem durch die Vorgabe 10 beschriebenen Programmbaustein zum einen eine Liste mit einer zwar noch nicht bekannten aber festen Länge L1 zur Bearbeitung übergeben wird. Die Reihenfolge der Listenelemente in dieser Liste wird als eine erste Reihenfolge S1 bezeichnet. Für den Dateneingang E2a hat die Bedienperson als Vorgabezeichen VZ = L2S2 vorgegeben. Dies bedeutet, daß eine weitere dem durch die Vorgabe 10 beschriebenen Programmbaustein zur Bearbeitung übergebene Liste eine Länge L2 hat, die von der Länge L1 unabhängig ist. Das bedeutet, daß die Länge der am Dateneingang E2a eingegebenen Liste von der Länge L1 der am Dateneingang E1a eingegebenen Liste abweichen kann. Nur in seltenen Fällen stimmen die Längen L1 und L2 überein. Der zweite Bestandteil des Vorgabezeichens VZ = L2S2 am Dateneingang E2a weicht vom zweiten Bestandteil des Vorgabezeichens VZ = L1S1 am Dateneingang E1a ab, so daß an beiden Dateneingängen E1a und E2a Listen anliegen können, deren Listenelemente verschieden angeordnet sind.

Für den Datenausgang A1a wurde das Vorgabezeichen VZ = L1S1 vorgegeben. Dies bedeutet, daß die vom Programmbaustein erzeugte Liste dieselbe Länge L1 wie die Liste am Dateneingang E1a hat. Die Reihenfolge S1 der Listenelemente in der erzeugten Liste stimmt mit der Reihenfolge der Listenelemente in der am Dateneingang E1a eingegebenen Liste überein. Für den Datenausgang A2a wurde ein Vorgabezeichen VZ = L1S3 vorgegeben. Die bei der Ausführung des durch die Vorgabe 10 beschriebenen Programmbausteins erzeugte zweite Liste hat somit ebenfalls die Länge L1. Die Reihenfolge der Listenelemente innerhalb der Liste hat sich jedoch verändert und wird nun mit S3 bezeichnet. Diese Reihenfolge kann sowohl von der Reihenfolge S1 als auch von der Reihenfolge S2 abweichen.

Figur 2 zeigt eine Vorgabe 20 für einen Programmbaustein mit zwei Dateneingängen E1b und E2b sowie einen Datenausgang A1b. Zum Dateneingang E1b bzw. E2b führt ein Pfeil 22 bzw. 24. Vom Datenausgang A1b führt ein Pfeil 26 weg. Am Dateneingang E1b wurde durch die Bedienperson das Vorgabezeichen VZ = L1S1 vorgegeben. Die Vorgabezeichen VZ sind unabhängig von den Vorgabezeichen für die Vorgabe 10. Das heißt, daß bei der Ausführung des durch die Vorgabe 20 beschriebenen Programmbausteins die Länge L1 der am Dateneingang E1b eingegebenen Liste von der Länge L1 der am Dateneingang E1a eines durch die Vorgabe 10 beschriebenen Programmbausteins eingegebenen Liste abweichen kann. Ähnliches gilt auch für die Reihenfolge S1 im Vorgabezeichen VZ für den Dateneingang E1b im Vergleich zur Reihenfolge S1 am Dateneingang E1a. Für den Dateneingang E2b wurde ein Vorgabezeichen VZ = L1S2 eingegeben. Dies bedeutet, daß an beiden Dateneingängen E1b und E2b Listen mit der gleichen Länge eingegeben werden müssen. Die Reihenfolge der Listenelemente innerhalb der Listen an den Dateneingängen E1b und E2b kann sich jedoch unterscheiden.

Am Datenausgang A1b des durch die Vorgabe 20 beschriebenen Programmbausteins hat die Bedienperson ein Vorgabezeichen VZ = L1S3 vorgegeben. Die Anzahl der Listenelemente in der vom durch die Vorgabe 20 beschriebenen Programmbaustein erzeugten Liste ist somit gleich der Anzahl der Listenelemente in den Listen an den Dateneingängen E1b und E2b.

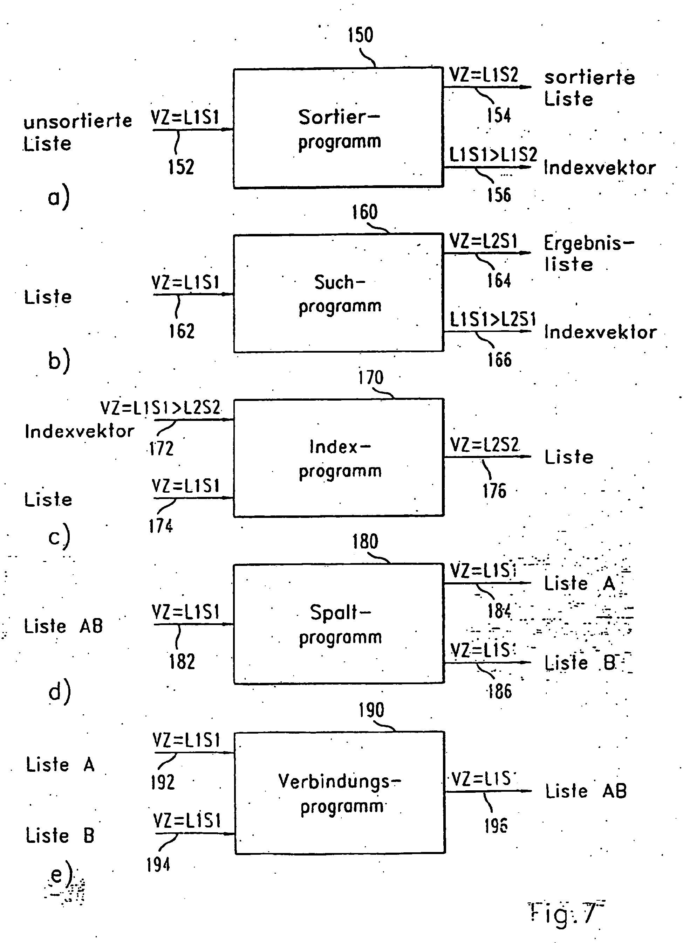

Die in den Figuren 1 und 2 gezeigten Vorgaben 10 und 20 für Programmbausteine dienen der vereinfachten Darstellung des Testverfahrens. Deshalb ist den durch die Vorgaben 10 und 20 beschriebenen Programmbausteinen keine bestimmte Funktion zugeordnet. Jedoch werden unten an Hand der Figur 7 auch Vorgaben für Programmbausteine mit vorgegebenen Funktionen erläutert.

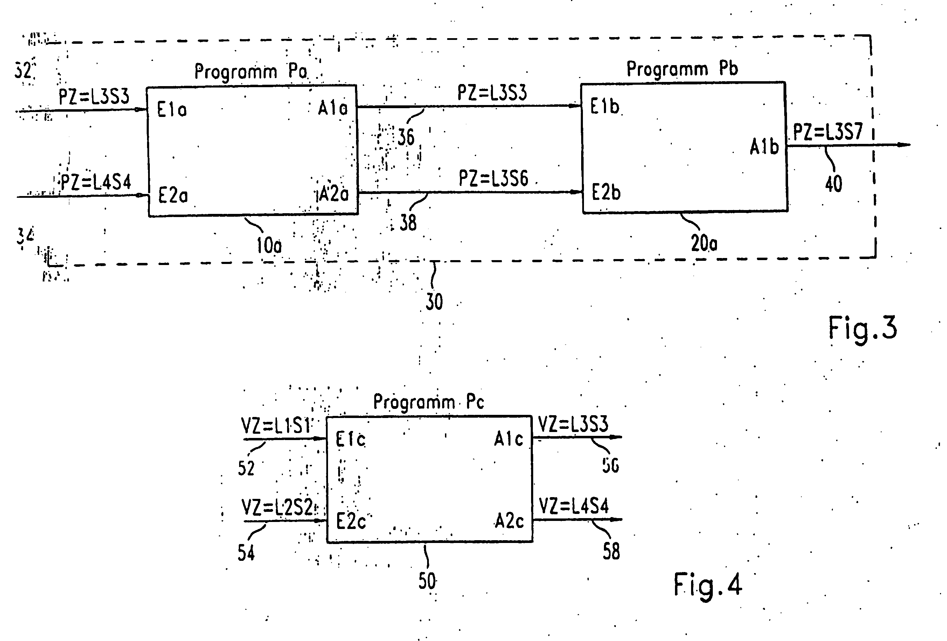

Figur 3 zeigt den Datenfluß in einem Programmsystem 30, welches zwei Programmbausteine 10a und 20a enthält. Die Funktion des Programmbausteins 10a wird durch die oben an Hand der Figur 1 erläuterte Vorgabe 10 beschrieben. Die Funktion des Programmbausteins 20a wird durch die oben an Hand der Figur 2 erläuterte Vorgabe 20 beschrieben. Die in Figur 3 gezeigte Darstellung entspricht der Darstellung auf dem Bildschirm eines Computers, mit dessen Hilfe das Programmsystem 30 unter Verwendung eines grafisch orientierten Entwicklungswerkzeuges erstellt wird. Ein Pfeil 32 führt von außen in den Block hinein, der das Programmsystem 30 darstellt, und endet am Eingang E1a des Programmbausteins 10a. Ein Pfeil 34 führt ebenfalls von außen in den Block zur Darstellung des Programmsystems 30 hinein und endet am Eingang E2a des Programmbausteins 10a. Der Ausgang A1a des Programmbausteins 10a ist der Ausgangspunkt für einen Pfeil 36, der zum Eingang E1b des Programmbausteins 20a führt. Ein Pfeil 38 führt vom Ausgang A2a des Programmbausteins 10a zum Eingang E2b des Programmbausteins 20a. Vom Ausgang A1b des Programmbausteins 20a führt ein Pfeil 40 aus dem Block heraus, der das Programmsystem 30 darstellt.

Somit hat das Programmsystem 30 zwei Dateneingänge E1a, E2a und einen Datenausgang A1b. An den durch die Pfeile 32 und 34 dargestellten Eingängen E1a, E2a eingegebene Listen werden zunächst vom Programmbaustein 10a bearbeitet, wobei bezüglich der Länge und der Anordnung der Listenelemente in den Listen die an Hand der Figur 1 für die Eingänge E1a, E2a genannten Bedingungen gelten. Die bei der Bearbeitung dieser Listen an den Ausgängen A1a und A2a erzeugten Listen werden danach beim Ausführen der Befehle des Programmbausteins 20a weiterbearbreitet. Für die an den Ausgängen A1a bzw. A2a erzeugten Listen gelten die oben an Hand der Figur 1 für diese Ausgänge erläuterten Bedingungen bezüglich der Länge und der Reihenfolge. Zusätzlich müssen die oben an Hand der Figur 2 erläutercen Bedingungen an den Eingängen E1b und E2b erfüllt werden. Am Ausgang A1b wird eine Liste erzeugt, welche die oben an Hand der Figur 2 erläuterten Bedingungen erfüllt.

Zum Testen der Verknüpfung zwischen den Programmbausteinen 10a und 20a im Programmsystem 30 werden zunächst durch das beim Testen verwendete Testprogramm an den Eingängen E1a und E2a Prüfzeichen PZ = L3S3 und PZ = L4S4 vorgegeben. Alternativ können die Prüfzeichen PZ des Programmsystems 30 auch durch eine Bedienperson vorgegeben werden. Z.B. um festzulegen, daß an zwei Eingänge Listen derselben Länge eingegeben werden. Die Vorgabezeichen VZ an den Eingängen E1a und E2a werden beim Festlegen der Prüfzeichen PZ nicht berücksichtigt. Es wird vom ungünstigsten Fall ausgegangen, bei dem sich sowohl die Anzahl der Listenelemente als auch die Reihenfolge der Listenelemente innerhalb der Listen an den beiden Eingängen E1a und E2a unterscheiden. Deshalb wird für den Eingang E1a ein Prüfzeichen PZ = L3S3 vorgegeben. Für den Eingang E2a wird ein Prüfzeichen PZ = L4S4 vorgegeben. Die Anzahl der Listenelemente L3 in der am Eingang E1a eingegebenen Liste und die Anzahl der Listenelemente L4 in der am Eingang E2a eingegebenen Liste können sich somit unterscheiden. Durch die Bestandteile S3 bzw. S4 wird angegeben, daß sich auch die Reihenfolge der Listenelemente innerhalb der Listen unterscheiden können. Auch die Prüfzeichen PZ vereinen jeweils zwei Bestandteile L und S für die Anzahl der Listenelemente bzw. für die Reihenfolge der Listenelemente innerhalb der Liste.

Die Prüfzeichen PZ = L3S3 und PZ = L4S4 an den Eingängen E1a und E2a lassen sich nicht überprüfen, weil die Vorgabezeichen VZ = L1S1 und VZ = L2S2 an diesen Eingängen E1a und E2a keine gemeinsamen Bestandteile haben.

Das zum Testen verwendete Programmsystem legt anschließend automatisch ein Prüfzeichen PZ = L3S3 für den Ausgang A1a des Programmbausteins 10a fest. Dabei wird zunächst der erste Teil L3 des Prüfzeichens nach dem im folgenden erläuterten Verfahren festgelegt. Der Datenausgang A1a erhält als ersten Teil des Prüfzeichens L3, weil der erste Teil des Vorgabezeichens VZ = L1S1 am Datenausgang A1a mit dem ersten Teil des Vorgabezeichens VZ = L1S1 am Dateneingang E1a übereinstimmt, vgl. Figur 1. Wird nämlich eine solche Übereinstimmung festgestellt, so wird der erste Teil L3 des Prüfzeichens PZ L3S3 vom betreffenden Dateneingang E1a in das Prüfzeichen PZ = L3S3 für den Datenausgang A1a übernommen. Der zweite Bestandteil S3 des Prüfzeichens PZ = L3S3 am Datenausgang A1a , wird durch das Testprogramm automatisch vom zweiten Bestandteil des Prüfzeichens = L3S3 am Dateneingang E1a übernommen, weil der zweite Bestandteil S1 des Vorgabezeichens VZ = L1S1 am Datenausgang A1a mit dem zweiten Teil S1 des Vorgabezeichens VZ = L1S1 am Dateneingang E1a übereinstimmt, vgl. Figur 1.

Beim Festlegen des Prüfzeichens PZ = L3S6 am Datenausgang A2a wird auf ähnliche Art und Weise vorgegangen. Für den ersten Teil L3 des Prüfzeichens PZ = L3S6 wird der Bezeichner L und der Wert Drei verwendet, weil der erste Bestandteil L1 des Vorgabezeichens VZ = L1S3 am Datenausgang A2a den Wert Eins hat und dieser Wert mit dem ersten Bestandteil L1 des Vorgabezeichens VZ = L1S1 am Dateneingang E1a übereinstimmt. Das Testprogramm überträgt aufgrund dieser Übereinstimmung den Wert Drei im ersten Teil L3 des Prüfzeichens PZ = L3S3 am Dateneingang E1a in den ersten Teil L3 des Prüfzeichens PZ = L3S6 am Datenausgang A2a. Für den zweiten Teil des Prüfzeichens PZ am Datenausgang A2a wird vom Testprogramm ein Wert gewählt, der bisher noch nicht verwendet worden ist, beispielsweise der Wert Sechs. Dies ist darauf zurückzuführen, daß der zweite Teil S3 des Vorgabezeichens VZ = L1S3 am Datenausgang A2a den Wert Drei hat, der in keinem anderen Vorgabezeichen VZ für den Programmbaustein 10 vorkommt. Somit kann das Testprogramm auch nicht wie in den vorangegangenen Fällen ein Prüfzeichen PZ bzw. ein Bestanteil eines Prüfzeichens PZ von einem Dateneingang E1a oder E2a des Programmbausteins 10a übernehmen.

Das Prüfzeichen PZ = L3S3 wird durch das Testprogramm aufgrund des Pfeils 36 auch dem Dateneingang E1b des Programmbausteins 20a zugewiesen. Aufgrund des Pfeils 38 wird das Prüfzeichen PZ = L3S6 am Datenausgang A2a des Programmbausteins 10a dem Dateneingang E2b des Programmbausteins 20a zugewiesen. Das Testprogramm überprüft nun zunächst, ob die Prüfzeichen PZ = L3S3 und PZ = L3S6 an den Dateneingängen E1b und E2b die durch die Vorgabezeichen VZ = L1S1 und VZ = L1S2 an den Dateneingängen E1b und E2b vorgegebenen Bedingungen erfüllen. Ein Vergleich findet an solchen Dateneingängen statt, an denen Vorgabezeichen mit gleichen Bestandteilen vorgegeben worden sind. Für die Dateneingänge E1b und E2b ist jeweils der erste Teil des Vorgabezeichens VZ = L1S1 bzw. VZ = L1S2 gleich. Deshalb wird durch das Testprogramm überprüft, ob auch der erste Teil der Prüfzeichen PZ = L3S3 und PZ = L3S6 übereinstimmt. In beiden Prüfzeichen PZ wird für das Längenkennzeichen L der Wert Drei ermittelt. Es liegt also Übereinstimmung vor. Eine Fehlermeldung wird durch das Testprogramm nicht erzeugt.

In einem nächsten Schritt legt das Testprogramm ein Prüfzeichen PZ für den Datenausgang A1b des Programmbausteins 20a fest. Der erste Teil des Prüfzeichens PZ wird mit L3 festgelegt, weil der erste Teil des Vorgabezeichens VZ = L1S3 am Datenausgang A1b mit dem ersten Teil des Vorgabezeichens VZ = L1S1 am Dateneingang E1b übereinstimmt. Aufgrund dieser Übereinstimmung wird der erste Teil des Prüfzeichens PZ = L3S3 in das Prüfzeichen PZ = L3S7 am Datenausgang A1b übernommen. Der zweite Teil S des Prüfzeichens PZ am Datenausgang A1b erhält den nächsten freien Wert Sieben, weil der zweite Teil S3 des Vorgabezeichens VZ = L1S3 an diesem Datenausgang A1b in keinem Vorgabezeichen VZ für die Dateneingänge E1b, E2b des Programmbausteins 20a auftritt.

Damit ist der Test des Programmsystems 30 abgeschlossen. Die Prüfzeichen PZ = L3S3 und PZ = L4S4 an den Eingängen des Programmsystems 30 sowie das Prüfzeichen PZ = L3S7 am Ausgang des Programmsystems 30 lassen sich später als Vorgabezeichen verwenden, wenn das Programmsystem 30 selbst als einzelner Programmbaustein in einem größeren Programmsystem verwendet wird.

Figur 4 zeigt eine Vorgabe 50 für einen Programmbaustein mit zwei Dateneingängen E1c und E2c sowie zwei Datenausgängen A1c und A2c. Zum Dateneingang E1c bzw. E2c führt ein Pfeil 52 bzw. ein Pfeil 54. Vom Datenausgang A1c bzw. A2c führt ein Pfeil 56 bzw. 58 weg. Im Gegensatz zu den Vorgabezeichen VZ der Vorgaben 10 und 20 wurden die Vorgabezeichen VZ für die Vorgabe 50 automatisch durch das Testprogramm vorgegeben, weil über die Funktion des durch die Vorgabe 50 beschriebenen Programmbausteins keine Annahmen getroffen werden konnten. Die automatische Generierung muß vom ungünstigsten Fall ausgehen: Alle Ein- und Ausgänge sind voneinander unabhängig. Beim Festlegen der Vorgabezeichen wurden getrennt für die ersten Teile L und die zweiten Teile S jeweils aufeinanderfolgende Werte vergeben. Für den Dateneingang E1c wurde ein Vorgabezeichen VZ = L1S1 festgelegt. Für den Dateneingang E2c wurde das Vorgabezeichen VZ = L2S2 festgelegt. Am Datenausgang A1c bzw. A2c wurde das Vorgabezeichen VZ = L3S3 bzw. VZ = L4S4 festgelegt. Aufgrund der Vorgabezeichen VZ der Vorgabe 50 können die Listen an den Eingängen E1a, E2a eine voneinander verschiedene Anzahl von Listenelementen haben. Auch die Reihenfolge der Listenelemente innerhalb der Listen, die an den Eingängen E1c, E2c eingegeben werden, kann verschieden sein.

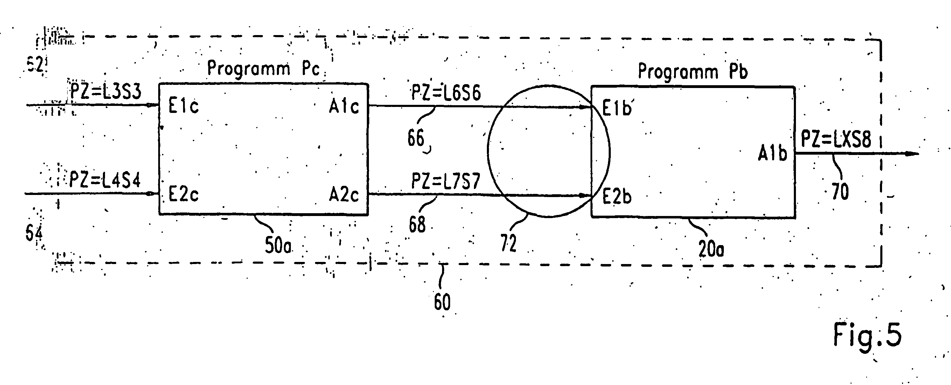

Figur 5 zeigt den Datenfluß in einem Programmsystem 60, das einen Programmbaustein 50a enthält, für den die Vorgabe 50 gilt, und das den Programmbaustein 20a enthält. Die in Figur 5 gezeigte Darstellung stimmt dabei mit der Darstellung auf einem Bildschirm eines Computersystems überein, auf dem das Programmsystem 60 mit Hilfe eines grafisch orientierten Entwicklungswerkzeugs erstellt wird.

Ein Pfeil 62 führt in einen Block hinein, der das Programmsystem 60 darstellt, und endet am Eingang E1c des Programmbausteins 50a. Ein Pfeil 64 führt ebenfalls in den Block, der das Programmsystem 60 darstellt, und endet am Eingang E2c des Programmbausteins 50a. Die Pfeile 62 und 64 verdeutlichen die beiden Dateneingänge des Programmsystems 60.

Vom Datenausgang A1c des Programmbausteins 50a führt ein Pfeil 66 zum Dateneingang E1b des Programmbausteins 20a. Ein Pfeil 68 führt vom Datenausgang A2c des Programmbausteins 50a zum Dateneingang E2b des Programmbausteins 20a. Vom Datenausgang A2b des Programmbausteins 20a führt ein Pfeil 70 aus dem Block heraus, der das Programmsystem 60 darstellt. Somit hat das Programmsystem 60 einen einzigen Datenausgang.

Die Zuordnung der Programmbausteine 50a und 20a zum Programmsystem 60 sowie der Verlauf der Pfeile 62 bis 70 wurden durch eine Bedienperson des Testprogramms vorgegeben. Außerdem hat die Bedienperson die Vorgabezeichen VZ für die den Programmbaustein 20a betreffende Vorgabe 20 vorgegeben. Die Vorgabezeichen VZ für die den Programmbaustein 50a betreffende Vorgabe 50 wurden, wie oben an Hand der Figur 4 erläutert, automatisch vom Testprogramm vergeben. Beim Testen der in Figur 5 dargestellten Verknüpfungen zwischen den Programmbausteinen 50a und 20a werden zunächst durch das Testprogramm oder eine Bedienperson die Prüfzeichen PZ = L3S3 und PZ = L4S4 an den Dateneingängen E1c und E2c des Programmbausteins 50a und damit auch an den Eingängen des Programmsystems 60 vorgegeben. Die Prüfzeichen PZ an den Eingängen des Programmsystems 60 werden vom Testprogramm so gewählt, daß sie sich voneinander unterscheiden, weil so der Test für den ungünstigsten Fall durchgeführt werden kann. Am Dateneingang E1c wird das Prüfzeichen PZ = L3S3 festgelegt. Am Dateneingang E2c wird das Prüfzeichen PZ = L4S4 vorgegeben. Somit können sich sowohl die Anzahl der Listenelemente als auch die Reihenfolge der Listenelemente innerhalb der Listen an den Dateneingängen E1c und E2c unterscheiden.

In einem folgenden Testschritt stellt das Testprogramm fest, daß die Prüfzeichen PZ = L3S3 und PZ = L4S4 unter Verwendung der Vorgabezeichen VZ = L1S1 und VZ = L2S2 an den Dateneingängen E1c und E2c des Programmbausteins 50a nicht überprüft werden können, weil die Vorgabezeichen VZ = L1S1 und VZ = L2S2 in keinem Teil übereinstimmen. Deshalb entfällt eine Prüfung auf Gleichheit innerhalb der Prüfzeichen PZ an den Dateneingängen E1c und E2c.

Dann ermittelt das Testprogramm automatisch die Prüfzeichen PZ an den Datenausgängen A1c und A2c. Da die Vorgabezeichen VZ = L3S3 und VZ = L4S4 an den Datenausgängen A1c und A2c keine gemeinsamen Bestandteile mit den Vorgabezeichen VZ = L1S1 und VZ = L2S2 an den Dateneingängen E1c und E2c des Programmbausteins 50a haben, werden die Werte für die Prüfzeichen PZ vom Testprogramm automatisch gewählt, wobei Werte verwendet werden, die noch nicht für Prüfzeichen PZ im aktuellen Testlauf verwendet worden sind. Am Datenausgang A1c wird das Prüfzeichen PZ = L6S6 festgelegt. Für den Datenausgang A2c wird das Prüfzeichen PZ = L7S7 festgelegt. Das Prüfzeichen PZ = L6S6 wird aufgrund des Pfeils 66 als Prüfzeichen PZ für den Dateneingang E1b des Programmbausteins 20a verwendet. Aufgrund des Pfeils 68 wird das Prüfzeichen PZ = L7S7 des Datenausgangs A2c als Prüfzeichen PZ am Dateneingang E2b des Programmbausteins 20a verwendet.

In einem nächsten Schritt prüft das Testprogramm, ob die Prüfzeichen PZ = L6S6 und PZ = L7S7 an den Dateneingängen E1b und E2b die durch die Vorgabezeichen VZ = L1S1 und VZ = L1S2 an den Dateneingängen E1b und E2b vorgegebenen Bedingungen erfüllt. Der erste Teil der Vorgabezeichen VZ = L1S1 und VZ = L1S2 stimmt überein. Deshalb wird überprüft, ob auch der erste Teil der Prüfzeichen PZ = L6S6 und PZ = L7S7 übereinstimmt. Die Teile L6 und L7 unterscheiden sich jedoch. Deshalb werden vom Testprogramm die Dateneingänge E1b und E2b mit Hilfe eines Kreises 72 markiert. Dies ist eine Fehlermeldung für die Bedienperson, die darauf hinweist, daß es beim Ausführen der Befehle des Programmsystems 60 zu Fehlern kommen wird. Gleichzeitig markiert der Kreis 72 die Stelle, an der die Ursache für den Fehler liegt.

Nach der Darstellung des Kreises 72 durch das Testprogramm wird die Ermittlung und Überprüfung von Prüfzeichen PZ fortgesetzt, um gegebenenfalls weitere Hinweise zu erzeugen. Das Prüfzeichen PZ am Datenausgang A1b erhält im ersten Teil den Wert X, der auf einen Fehler hinweist. Alle weiteren Vergleiche mit X würden Folge-Hinweise erzeugen. Durch die Beseitigung des durch den Kreis 72 markierten Fehlers, werden auch die Folgefehler beseitigt. Für den zweiten Teil des Prüfzeichens PZ am Datenausgang A16 wird der Wert Acht gewählt, weil der zweite Teil des Vorgabezeichens VZ = L1S3 am Datenausgang A1b an keinem Dateneingang E1b bzw. E2b des Programmbausteins 20a verwendet wird. Das Testprogramm wählt einen Wert, der beim Testen noch nicht verwendet worden ist, d.h. hier den Wert Acht. Damit ist die Überprüfung des Programmsystems 60 abgeschlossen.

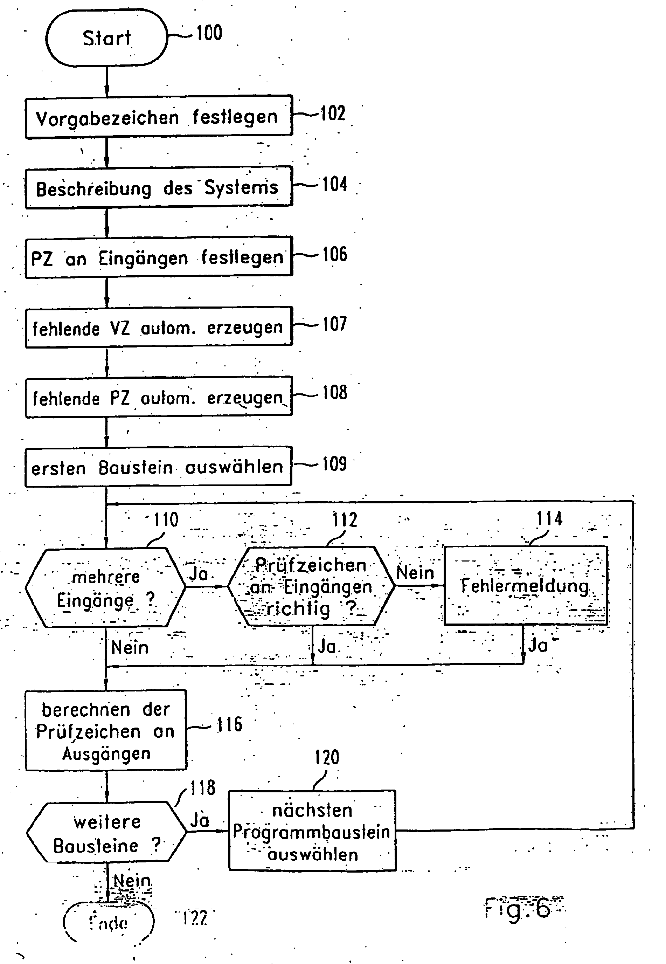

Figur 6 zeigt ein Flußdiagramm mit Verfahrensschritten, die beim Testen des Programmsystems 30 bzw. 60 ausgeführt werden. Das Testverfahren beginnt in einem Verfahrensschritt 100.

In einem folgenden Verfahrensschritt 102 werden die Vorgabezeichen der Vorgaben für einzelne Programmbausteine des Programmsystems 30, 60 durch die Bedienperson festgelegt. Nach dem Festlegen der Vorgabezeichen wird das Verfahren in einem Verfahrensschritt 104 fortgesetzt.

Im Verfahrensschritt 104 wird durch die Bedienperson die Verknüpfung der Programmbausteine im Programmsystem 30 bzw. 60 vorgegeben. Die Verknüpfung wird mit Hilfe einer Beschreibungssprache im Datenspeicher des Computers gespeichert, auf dem das Testprogramm ausgeführt wird.

Im Verfahrensschritt 106 werden von einer Bedienperson Prüfzeichen an ausgewählten Datenein- und -ausgängen des Programmsystems 30, 60 vorgegeben.

In einem Verfahrensschritt 107 werden vom Testprogramm automatisch Vorgabezeichen festgelegt, für die im Verfahrensschritt 102 von der Bedienperson keine Angaben gemacht worden sind. Die Vorgabezeichen werden so festgelegt, daß für einzelne Bestandteile der Vorgabezeichen eines Programmbausteins jeweils verschiedene Werte vorgegeben werden.

Im folgenden Verfahrensschritt 108 werden für die von der Bedienperson nicht ausgewählten Dateneingänge Prüfzeichen PZ festgelegt. Die Prüfzeichen werden so festgelegt, daß für die einzelnen Bestandteile der Prüfzeichen jeweils verschiedene Werte vorgegeben werden.

In einem nächsten Verfahrensschritt 109 wird ein erster Programmbaustein ausgewählt, für den die Prüfzeichen an den Dateneingängen bekannt sind. Gibt es keinen solchen Programmbaustein, so wird ein Programmbaustein gewählt, für den zumindest an einigen Dateneingängen Prüfzeichen bekannt sind.

In einem Verfahrensschritt 110 wird überprüft, ob der ausgewählte Programmbaustein mehrere Dateneingänge hat. Ist dies der Fall, so folgt unmittelbar nach dem Verfahrensschritt 110 ein Verfahrensschritt 112, in dem geprüft wird, ob die Prüfzeichen an den Dateneingängen des Programmbausteins die Vorgaben erfüllen, die durch die Vorgabezeichen an diesen Dateneingängen gestellt werden. Liegen an Dateneingängen mit gleichen Vorgabezeichenteilen unterschiedliche Prüfzeichenteile an, so wird in einem folgenden Verfahrensschritt 114 ein Hinweis erzeugt, welcher je nach Situation eine Fehlermeldung (L erfüllt die Vorgabe nicht) oder eine Warnung (S erfüllt die Vorgabe nicht) sein kann. Dieser Hinweis wird beispielsweise mit Hilfe eines Kreises angezeigt, der die betreffenden Dateneingänge umschließt. Nach der Ausgabe der Fehlermeldung wird das Verfahren in einem Verfahrensschritt 116 fortgesetzt.

Wird im Verfahrensschritt 110 festgestellt, daß der ausgewählte Programmbaustein nur einen oder keinen Dateneingang hat, so folgt unmittelbar nach dem Verfahrensschritt 110 der Verfahrensschritt 116. Der Verfahrensschritt 116 folgt auch unmittelbar nach dem Verfahrensschritt 112, wenn festgestellt wird, daß die Prüfzeichen an allen Dateneingängen des Programmbausteins den Vorgaben entsprechen, die durch die Vorgabezeichen an den Dateneingängen des Programmbausteins vorgegeben sind.

Im Verfahrensschritt 116 werden die Prüfzeichen an den Datenausgängen des Programmbausteins ermittelt. Dabei wird wie oben an Hand der Figuren 3 und 5 erläutert vorgegangen.

Nach dem Verfahrensschritt 116 folgt ein Verfahrensschritt 118, in dem überprüft wird, ob das zu testende Programmsystem weitere Programmbausteine enthält. Ist dies der Fall, so folgt nach dem Verfahrensschritt 118 ein Verfahrensschritt 120, in welchem der nächste Programmbaustein nach einer vorgegebenen Auswahlstrategie ausgewählt wird. Beispielsweise wird von den noch nicht getesteten Programmbausteinen jeweils der Programmbaustein ausgewählt, der den Eingängen des Programmsystems am nächsten liegt. Nach dem Verfahrensschritt 120 wird das Verfahren im verfahrensschritt 110 fortgesetzt, so daß eine Schleife aus den Verfahrensschritten 110 bis 120 durchlaufen wird.

Die Schleife wird im Verfahrensschritt 118 erst dann verlassen, wenn festgestellt wird, daß im Programmsystem keine Programmbausteine mehr enthalten sind, für deren Datenausgänge noch keine Prüfzeichen berechnet worden sind. Wurden die Prüfzeichen an den Datenausgängen für alle Programmbausteine berechnet, so folgt unmittelbar nach dem Verfahrensschritt 118 ein Verfahrensschritt 122, in welchem das Testverfahren beendet wird.

Figur 7 zeigt in Teilen a bis e Vorgaben 150, 160, 170, 180 bzw. 190 für Programmbausteine, die ein Sortierprogramm, ein Suchprogramm, ein Indexprogramm, ein Spaltprogramm bzw. ein Verbindungsprogramm enthalten. Die durch die in Figur 7 dargestellten Vorgaben beschriebenen Programmbausteine dienen zum Durchführen grundlegender Funktionen der Listenbearbeitung.

Teil a der Figur 7 zeigt die Vorgabe 150 für das Sortierprogramm, das zum Sortieren einer unsortierten Liste verwendet wird, deren Listenelemente einzelne Daten sind, d.h. daß die Listenelemente keine Datenstrukturen mit mehreren Daten sind. Das Übergeben der unsortierten Liste wird mit Hilfe eines Pfeils 152 dargestellt, der zum Eingang des Sortierprogramms führt. Beim Ausführen der Befehle des Sortierprogramms durch einen Prozessor wird die unsortierte Liste gemäß einem im Sortierprogramm enthaltenen Sortierverfahren sortiert. Die sortierte Liste wird in einem Speicherbereich ohne Datenübertragung gespeichert oder direkt zum Dateneingang eines nächsten Programmbausteins übertragen. Das Speichern bzw. Übertragen wird durch einen Pfeil 154 verdeutlicht, der von einem oberen Datenausgang des Sortierprogramms 150 wegzeigt. Außerdem erzeugt das Sortierprogramm einen Indexvektor, in welchem vermerkt ist, wie sich die Reihenfolge der Listenelemente in der sortierten Liste im Vergleich zur unsortierten Liste verändert hat. Werden beispielsweise die Listenelemente der unsortierten Liste beginnend mit dem Wert Eins durchgezählt, so läßt sich an Hand einer veränderten Reihenfolge im Indexvektor erkennen, an welcher Stelle das betreffende Listenelement ursprünglich gestanden hat. Beginnt der Indexvektor beispielsweise mit der Folge Vier, Sieben, Eins, ..., so bedeutet dies, daß das vierte Element der unsortierten Liste das erste Element in der sortierten Liste ist. Das siebte Element der unsortierten Liste ist das zweite Element der sortierten Liste. Das erste Element der unsortierten Liste ist nun das dritte Element der sortierten Liste. Der Indexvektor wird ebenfalls in einem Speicher gespeichert. Dieser Vorgang wird durch einen Pfeil 156 verdeutlicht, der vom unteren Datenausgang des Sortierprogramms 150 wegzeigt. Jedoch ist beim Testen die Folge Vier, Sieben, Eins, ..., nicht bekannt. Durch den Bestandteil S2 ist lediglich eine bestimmte Abfolge bezeichnet, ohne daß Werte für die Abfolge der Listenelemente angegeben werden können.

Durch eine Bedienperson wurden Vorgabezeichen VZ für den Dateneingang und den oberen Datenausgang des Sortierprogramms vorgegeben. Am Dateneingang wurde das Vorzeichen VZ = L1S1 festgelegt. Für den Datenausgang wurde das Vorgabezeichen VZ = L1S2 festgelegt. Demzufolge wird die Länge der unsortierten Liste durch das Sortierprogramm nicht verändert. Unsortierte Liste und sortierte Liste haben die gleiche Anzahl Listenelemente. Die Anordnung der Listenelemente innerhalb der Liste wird jedoch verändert. Der zweite Bestandteil des Vorgabekennzeichens VZ = L1S1 und der zweite Bestandteil des Vorgabezeichens VZ = L1S2 weichen deshalb voneinander ab. Der Indexvektor hat ein Vorgabezeichen, in welchem das Vorgabezeichen VZ = L1S1 für den Dateneingang und das Vorgabezeichen VZ = L1S2 für den Datenausgang des Sortierprogramms 150 mit Hilfe eines Verknüpfungsoperators ">" verknüpft sind. Das Vorgabezeichen des Indexvektors legt somit fest, daß die Längen der unsortierten und der sortierten Liste gleichgeblieben sind und daß sich die Reihenfolge von einer Reihenfolge S1 zur Reihenfolge S2 verändert hat.

Teil b der Figur 7 zeigt die Vorgabe 160 für das Suchprogramm, das zum Suchen eines bestimmten Listenelementes in einer Liste verwendet wird. Die zu durchsuchende Liste wird aus einem Speicherbereich gelesen. Dieser Vorgang wird durch einen Pfeil 162 dargestellt, der an einem Dateneingang des Suchprogramms endet. Beim Ausführen der Befehle des Suchprogramms wird eine Ergebnisliste erzeugt, die alle Listenelemente enthält, die ein vorgegebenes Suchkriterium erfüllen. Die Ergebnisliste wird in einem Speicher gespeichert, vgl. Pfeil 164, der vom oberen Datenausgang des Suchprogramms wegführt. Das Suchprogramm erzeugt außerdem einen Indexvektor, der angibt, an welcher Stelle die Elemente der Ergebnisliste in der zu durchsuchenden Liste gestanden haben. Der Indexvektor wird ebenfalls im Speicher gespeichert, vgl. vom unteren Datenausgang des Suchprogramms wegführenden Pfeil 166.

Durch eine Bedienperson wurden die Vorgabezeichen VZ am Dateneingang bzw. am oberen Datenausgang des Suchprogramms vorgegeben. Für den Dateneingang wurde das Vorgabezeichen VZ = L1S1 vorgegeben. Der obere Datenausgang des Suchprogramms hat das Vorgabezeichen VZ = L2S1. Somit kann sich die Länge L1 und L2 bzw. die Anzahl der Listenelemente in der zu durchsuchenden Liste und in der Ergebnisliste unterscheiden. Die Anordnung der Listenelemente in der Ergebnisliste entspricht jedoch der Anordnung der Elemente in der zu durchsuchenden Liste. Daß in der Ergebnisliste bei geeigneter Wahl des Suchkriteriums üblicherweise Listenelemente fehlen, d.h. Lücken vorhanden sind, ändert nichts an der Reihenfolge der Listenelemente innerhalb der Ergebnisliste im Vergleich zur Reihenfolge der Listenelemente innerhalb der zu durchsuchenden Liste. Die ordnungsgemäße Bearbeitung von Listen mit gleicher Reihenfolge ist somit nur gewährleistet, wenn auch die Länge mit einbezogen wird.

Der Indexvektor hat ein Vorgabezeichen VZ = L1S1>L2S1. An Hand dieses Vorgabezeichens ist erkennbar, daß das Suchprogramm zwar die Anzahl der Listenelemente jedoch nicht die Art der Anordnung der Listenelemente verändert.

Teil c der Figur 7 zeigt die Vorgabe 170 für das Indexprogramm, das eine Eingangsliste in eine durch den Indexvektor angegebene Reihenfolge L2S2 bringt, wobei der zweite Teil des Vorgabezeichens des Indexvektors das Vorgabezeichen für die erzeugte Liste vorgibt. Der Indexvektor wird aus einem Datenspeicher gelesen, vgl. Pfeil 172, der zum oberen Dateneingang des Indexprogramms führt. Die Eingangsliste wird ebenfalls aus einem Datenspeicher gelesen, vgl. Pfeil 174, der zum unteren Eingang des Indexprogramms führt. Die vom Indexprogramm erzeugte Ergebnisliste wird ebenfalls wieder im Speicher gespeichert, vgl. Pfeil 176, der vom Datenausgang des Indexprogramms wegführt.

Die Vorgabezeichen für das Indexprogramm 170 wurden von einer Bedienperson vorgegeben. Als Vorgabezeichen für den Indexvektor wurde das Vorgabezeichen VZ = L1S1>L2S2 vorgegeben. Der untere Dateneingang hat das Vorgabezeichen VZ = L1S1. Der Datenausgang hat das Vorgabezeichen L2S2. Die Eingabeliste und die Ergebnisliste des Indexprogramms unterscheiden sich somit sowohl hinsichtlich der Anzahl der Listenelemente als auch hinsichtlich der Anordnung der Listenelemente. Das Vorgabezeichen des Indexvektors gibt an, daß die Eingangsliste die Länge L1 und die Anordnung S1 haben muß. Erzeugt wird eine Ausgangsliste mit einer Länge L2 und einer anderen Anordnung S2, die im Indexvektor zwar bezeichnet ist, aber zum Testzeitpunkt nicht bekannt ist.

Teil d der Figur 7 zeigt die Vorgabe 180 für das Spaltprogramm, das zum Aufspalten einer Eingangsliste in zwei Ausgangslisten dient. Beim Aufspalten werden ein Teil der Daten eines Listenelementes der einen Ausgangsliste zugeordnet und der andere Teil der Daten des Listenelementes wird der anderen Ausgangsliste zugeordnet. Somit haben Eingangsliste und Ausgangslisten die gleiche Anzahl von Listenelementen. Die Reihenfolge der Listenelemente bleibt ebenfalls unverändert, wenn aus der Eingangsliste die beiden Ausgangslisten erzeugt werden.

Die Eingangsliste wird aus einem Speicher gelesen. Das Lesen der Eingangsliste wird durch einen Pfeil 182 dargestellt. Die beiden Ausgangslisten werden wiederum in den Speicher gespeichert, vgl. Pfeile 184 und 186.

Die Bedienperson hat als Vorgabezeichen für den Dateneingang des Spaltprogramms das Vorgabezeichen VZ = L1S1 vorgegeben. Als Vorgabezeichen für die beiden Datenausgänge des Spaltprogramms wurden ebenfalls Vorgabezeichen VZ = L1S1 vorgegeben. Die Vorgabezeichen VZ sind also am Dateneingang und an den Datenausgängen des Spaltprogramms gleich.

Ein Teil e der Figur 7 zeigt die Vorgabe 190 für das Verbindungsprogramm, das zum Verbinden zweier Eingangslisten dient. Beim Verbinden werden jeweils die Daten der Listenelemente der ersten Eingangsliste mit den Daten der Listenelemente der zweiten Eingangsliste zu Listenelementen einer Ergebnisliste verbunden. Die erste Eingangsliste wird am oberen Eingang des Verbindungsprogramms eingegeben, vgl. Pfeil 192. Die zweite Eingangsliste wird am unteren Eingang des Verbindungsprogramms eingegeben, vgl. Pfeil 194. Ein vom Ausgang des Verbindungsprogramms 190 wegzeigender Pfeil 196 stellt einen Speichervorgang dar, bei dem die Ergebnisliste im Datenspeicher gespeichert wird. Da beim Verbinden der beiden Eingangslisten zur Ergebnisliste weder die Anzahl der Listenelemente noch die Reihenfolge der Listenelemente verändert wird, wurde von einer Bedienperson für die beiden Dateneingänge und den Datenausgang jeweils das gleiche Vorgabezeichen VZ = L1S1 vorgegeben.

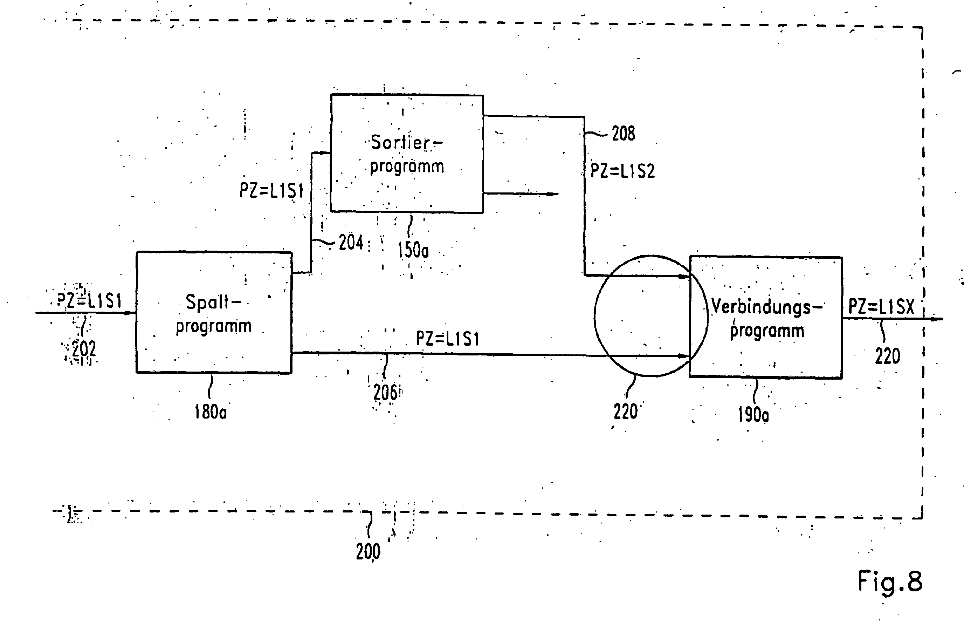

Figur 8 zeigt den Datenfluß in einem Programmsystem 200, das ein Spaltprogramm 180a, ein Sortierprogramm 150a und ein Verbindungsprogramm 190a enthält. Für das Spaltprcgramm 180a gilt die Vorgabe 180. Ebenso gilt für das Sortierprogramm 150a bzw. das Verbindungsprogramm 190a die Vorgabe 150 bzw. 190. Das Programmsystem 200 dient dazu, eine Eingangsliste nach einem vorgegebenen Sortierverfahren zu sortieren. Enthalten die Listen der Eingangsliste beispielsweise den Namen und die Adresse einer Person, so besteht das Sortierverfahren beispielsweise darin, die Personennamen alphabetisch zu ordnen. Um das Ordnen mit dem gegebenen Sortierprogramm zu ermöglichen, sollen zunächst die Adreßdaten von den Namensdaten mit Hilfe des Spaltprogramms 180a abgespaltet werden.

Der Dateneingang des Spaltprogramms 180a ist mit einem Pfeil 202 verbunden, der in das Programmsystem 200 hineinzeigt. Der obere Ausgang des Spaltprogramms 180a ist mit dem Eingang des Sortierprogramms 150a verbunden, vgl. Pfeil 204. Ein Pfeil 206 verbindet den unteren Ausgang des Spaltprogramms 180a mit dem unteren Eingang des Verbindungsprogramms 190a.

Der obere Datenausgang des Sortierprogramms 150a ist über einen Pfeil 208 mit dem oberen Dateneingang des Verbindungsprogramms 190 verbunden. Der untere Datenausgang des Sortierprogramms 150a, d.h. der Datenausgang für den Indexvektor, wird im Programmsystem 200 nicht verwendet.

Vom Datenausgang des Verbindungsprogramms 190a führt ein Pfeil 210 aus dem zur Darstellung des Programmsystems 200 verwendeten Block heraus.

Das Programmsystem 200 hat somit einen Dateneingang und einen Datenausgang. Für den Dateneingang wird beim Testen automatisch ein Prüfzeichen PZ = L1S1 vorgegeben.

In einem nächsten Schritt ermittelt das Testprogramm ein Prüfzeichen PZ = L1S1 am oberen Datenausgang des Spaltprogramms 180a. Beim Ermitteln des Prüfzeichens PZ = L1S1 werden die Vorgabezeichen VZ der Vorgabe 180 verwendet. Da die Vorgabezeichen am oberen Datenausgang und am Dateneingang übereinstimmen, wird durch das Testprogramm das Prüfzeichen PZ = L1S1 als Prüfzeichen für den oberen Datenausgang übernommen. Beim Ermitteln des Prüfzeichens PZ = L1S1 am unteren Datenausgang des Spaltprogramms 180a wird ebenfalls das Prüfzeichen PZ = L1S1 vom Dateneingang des Spaltprogramms 180a übernommen, weil die Vorgabezeichen VZ am unteren Datenausgang und am Dateneingang übereinstimmen, vgl. Teil d der Figur 7.

Anschließend ermittelt das Testprogramm ein Prüfzeichen PZ = L1S2 für den oberen Datenausgang des Sortierprogramms 150a. Eine Überprüfung des Prüfzeichens PZ = L1S1 am Dateneingang des Sortierprogramms 150a findet nicht statt, weil es nur einen Dateneingang gibt und somit ein Vergleich der Prüfzeichen zweier Dateneingänge nicht möglich ist. Das Prüfzeichen PZ = L1S2 wird ermittelt, indem zunächst für den ersten Teil L1 der erste Teil des Vorgabezeichens am oberen Datenausgang des Sortierprogramms 150a gelesen wird. Zu diesem Vorgabezeichen wird der Dateneingang ermittelt, weil auch dessen Vorgabezeichen im ersten Teil den Wert L1 hat. Demzufolge kann der erste Teil des Prüfzeichens PZ = L1S1 am Dateneingang des Sortierprogramms 150a in den ersten Teil des Prüfzeichens PZ = L1S2 am Datenausgang des Sortierprogramms 150a übernommen werden. Anschließend wird der zweite Teil des Prüfzeichens PZ = L1S2 ermittelt, indem der zweite Teil des Vorgabezeichens VZ = L1S2 am Datenausgang der Vorgabe 150 für das Sortierprogramm 150a betrachtet wird. Der Teil S2 tritt am Dateneingang der Vorgabe 150 nicht auf. Deshalb wird durch das Testprogramm automatisch ein freier Wert für den zweiten Teil vergeben, hier der Wert Zwei.

Danach überprüft das Testprogramm die Prüfzeichen PZ = L1S2 am oberen Dateneingang des Verbindungsprogramms 190a und das Prüfzeichen PZ = L1S1. Gemäß der Vorgabezeichen VZ der Vorgabe 190 müssen an den Dateneingängen des Verbindungsprogramms 190a Listen eingegeben werden, die die gleiche Anzahl Listenelemente und die gleiche Reihenfolge der Listenelemente haben. Beim Vergleich der Prüfzeichen PZ = L1S2 und PZ = L1S1 wird jedoch festgestellt, daß sich die Reihenfolge S2 und S1 unterscheidet. Demzufolge wird um die Dateneingänge des Verbindungsprogramms 190a automatisch ein Kreis 220 gezogen, der für eine Bedienperson eine Warnung ist. Anschließend ermittelt das Testprogramm ein Prüfzeichen PZ = L1SX am Datenausgang des Verbindungsprogramms 190a. Dabei werden die Vorgabezeichen VZ der Vorgabe 190 verwendet. Der erste Teil des Prüfzeichens PZ wird von den Dateneingängen übernommen, weil der erste Teil des Vorgabezeichens am Datenausgang der Vorgabe 190 für das Verbindungsprogramms mit den ersten Teilen der Vorgabezeichen an den Dateneingängen der Vorgabe 190 übereinstimmt. Der zweite Teil des Prüfzeichens PZ = L1SX erhält einen Wert X, der darauf hinweist, daß eine richtige Ermittlung nicht möglich ist, da an den Dateneingängen des Verbindungsprogramms 190a ein Widerspruch entdeckt worden ist.

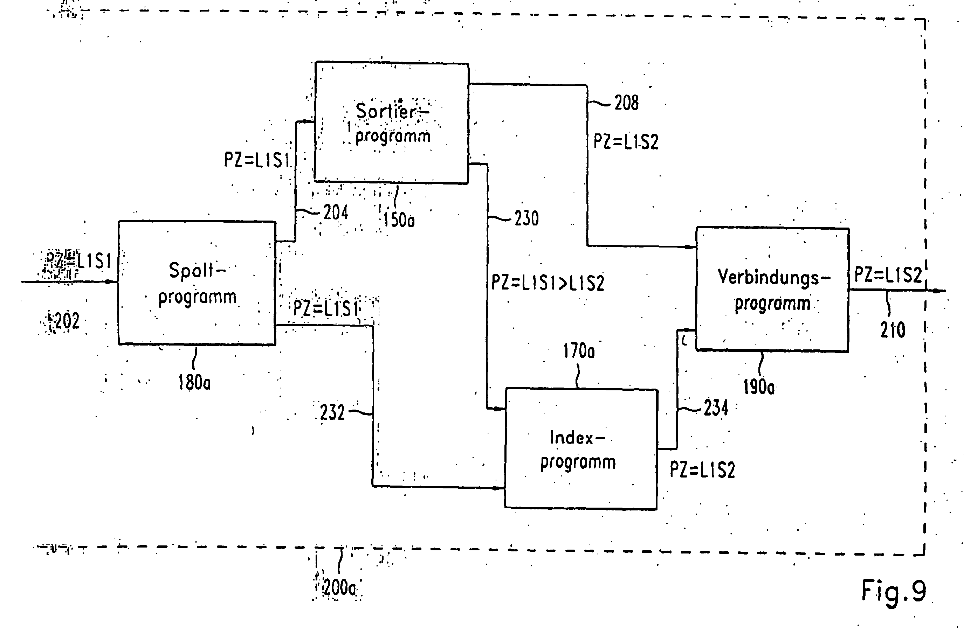

Das Testprogramm läßt sich wahlweise entweder beim Ziehen jedes Pfeils 202 bis 210 durch die Bedienperson automatisch starten oder das Testprogramm wird von der Bedienperson gestartet, nachdem alle Pfeile 202 bis 210 vorgegeben sind. Im Ausführungsbeispiel reagiert die Bedienperson auf die.durch den Kreis 220 angezeigte Warnung dadurch, daß mit Hilfe des noch ungenutzten Indexvektors des Sortierprogramms 150a die Reihenfolge der Liste am unteren Datenausgang des Spaltprogramms 180a verändert wird. Das Ergebnis dieser Änderung ist in Figur 9 dargestellt.

Figur 9 zeigt den Datenfluß in einem geänderten Programmsystem 200a, welches zusätzlich zum Spaltprogramm 180a, zum Sortierprogramm 150a und zum Verbindungsprogramm 190a ein Indexprogramm 170a enthält. Für das Indexprogramm 170a gilt die Vorgabe 170. Der obere Dateneingang, d.h. der Dateneingang für den Indexvektor, des Indexprogramms 170a ist durch einen Pfeil 230 mit dem unteren Ausgang des Sortierprogramms 150a verbunden. Der Pfeil 230 verdeutlicht die Weiterbearbeitung des vom Sortierprogramm 150a erzeugten Indexvektors im Indexprogramm 170a. Auf den unteren Dateneingang des Indexprogramms 170a zeigt ein vom unteren Dateneingang des Spaltprogramms 180a kommender Pfeil 232. Vom Datenausgang des Indexprogramms 170a führt ein Pfeil 234 zum unteren Dateneingang des Verbindungsprogramms 190a.

Nach dem Einfügen des Indexprogamms 170a wird vom Testprogramm ein PrüfzeichenPZ = L1S1>L1S2 für den unteren Datenausgang des Sortierprogramms 150a ermittelt. An Hand der Vorgabezeichen der Vorgabe 150 für das Sortierprogramm 150a, vgl. Teil a der Figur 7, stellt das Testprogramm fest, daß vor dem Operator ">" das Vorgabezeichen VZ = L1S1 des Dateneingangs der Vorgabe 150 verwendet werden muß. Demzufolge wird das Prüfzeichen PZ = L1S1 in den Teil vor dem Operator ">" des Prüfzeichens PZ am unteren Datenausgang des Sortierprogramms 150a übernommen. Im Ausführungsbeispiel sind Prüfzeichen PZ = L1S1 und Vorgabezeichen VZ = L1S1 am Dateneingang des Sortierprogramms 150a zufälligerweise gleich. Dies muß jedoch nicht so sein. Beim Festlegen des nach dem Operator ">" liegenden Teils des Prüfzeichens am unteren Datenausgang des Sortierprogramms 150a wird ebenfalls das Vorgabezeichen der Vorgabe 150 für diesen Datenausgang verwendet. Der nach dem Operator ">" liegende Teil des Vorgabezeichens stimmt mit dem Vorgabezeichen am oberen Datenausgang des Sortierprogramms 150 bzw. 150a überein. Deshalb wird das für den oberen Datenausgang berechnete Prüfzeichen PZ = L1S2 in den nach dem Operator ">" liegenden Teil des Prüfzeichens PZ = L1S1>L1S2 übernommen. Das Prüfzeichen an einem Datenausgang kann generell unter Verwendung der Prüfzeichen eines anderen Datenausgangs berechnet werden. Ebenso werden Prüfzeichen an Dateneingängen unter Berücksichtigung von Prüfzeichen an anderen Dateneingängen desselben Programmbausteins berücksichtigt, wenn die betreffenden Dateneingänge gleiche Vorgabezeichen VZ haben.

Anschließend überprüft das Testprogramm die Prüfzeichen PZ = L1S1>L1S2 und PZ = L1S1 an den Dateneingängen des Indexprogramms 170a. Dabei wird festgestellt, daß der vor dem Operator ">" liegende Teil des Vorgabezeichens VZ für den oberen Eingang der Vorgabe 170 für das Indexprogramm 170a mit dem Vorgabezeichen VZ am unteren Dateneingang der Vorgabe 170 für das Indexprogramm 170a übereinstimmt. Demzufolge muß geprüft werden, ob dies auch für die Prüfzeichen zutrifft. Im erläuterten Ausführungsbeispiel wird kein Warnhinweis ausgegeben, weil der vor dem Prüfzeichen PZ = L1S1>L1S2 liegende Teil L1S1 mit dem Prüfzeichen PZ = L1S1 am unteren Dateneingang des Indexprogramms 170a übereinstimmt.

In einem nächsten Schritt ermittelt das Testprogramm ein Prüfzeichen PZ = L1S2 für den Datenausgang des Indexprogramms 170a. An Hand der Vorgabezeichen VZ der Vorgabe 170 für das Indexprogramm 170a, vgl. Teil c der Figur 7, wird festgestellt, daß das Vorgabezeichen am Ausgang der Vorgabe 170 dem nach dem Operator ">" stehenden Teil des Vorgabezeichens VZ = L1S1>L2S2 am oberen Eingang der Vorgabe 170 entspricht. Demzufolge muß der nach dem Operator ">" stehende Teil des Prüfzeichens PZ = L1S1>L1S2 am oberen Eingang des Indexprogramms 170a als Prüfzeichen PZ = L1S2 am Datenausgang des Indexprogramms 170a übernommen werden.

Nun wird durch das Testprogramm geprüft, ob die Prüfzeichen PZ = L1S2 und PZ = L1S2 an den Dateneingängen des Verbindungsprogramms 190a den Bedingungen genügen, die durch die Vorgabezeichen VZ = L1S1 an beiden Dateneingängen der Vorgabe 190 für das Verbindungsprogramm 190a festgelegt worden sind, vgl. auch Teil e der Figur 7. Gemäß dieser Vorgabezeichen müssen die Listen an den Dateneingängen des Verbindungsprogramms 190a sowohl die gleiche Anzahl von Listenelementen als auch die gleiche Anordnung der Listenelemente haben. Die Prüfzeichen PZ = L1S2 an den Dateneingängen des Verbindungsprogramms 190a genügen dieser Bedingung. Deshalb wird kein Warnhinweis mehr an den Dateneingängen des Verbindungsprogramms 190a ausgegeben.

Beim Festlegen des Prüfzeichens PZ = L1S2 am Datenausgang des Verbindungsprogramms 190a stellt das Testprogramm an Hand der Vorgabezeichen VZ = L1S1 der Vorgabe für das Verbindungsprogramm 190a fest, daß der Wert des Prüfzeichens PZ = L1S2 an einem der Dateneingänge als Prüfzeichen PZ = L1S2 für den Datenausgang übernommen werden kann. Das Testprogramm übernimmt die Werte in das Prüfzeichen PZ = L1S2 für den Datenausgang des Verbindungsprogramms 190a. Damit ist das Testverfahren beendet.

Bei einem anderen Ausführungsbeispiel wird auch die Bearbeitung von skalaren Größen zugelassen, d.h. von Größen, die nur ein Datum bzw. einen Datensatz mit einer vorgegebenen Struktur enthalten. Für die skalaren Größen werden keine Vorgabezeichen und keine Prüfzeichen benötigt, weil es nicht zu Fehlern bei der Verarbeitung kommen kann, wenn der Datentyp der Eingangsdaten mit dem geforderten Datentyp übereinstimmt.

Für Programmbausteine, bei denen an Stelle einer skalaren Größe eine Liste eingegeben wird bzw. für Programmbausteine, bei denen an Stelle einer Liste eine skalare Größe eingegeben wird, gelten die folgenden Regeln:
- Liegen an Dateneingängen für skalare Größen skalare Größen und an Listeneingängen Listen an, werden die Befehle des Programmbausteins nur einmal zur Laufzeit ausgeführt.
- Liegt an einem Dateneingang für eine Liste oder liegen an mehreren Dateneingängen für Datenlisten skalare Größen an, so werden die skalaren Größen als einelementige Listen aufgefaßt und erhalten das Vorgabezeichen VZ = L0S0. Zur Laufzeit werden die Befehle des betreffenden Programmbausteins nur einmal aufgerufen.
- Liegt an einem Dateneingang für eine skalare Größe eine Liste an, so wird der Programmbaustein zur Laufzeit für jedes Element der Liste aufgerufen, wobei die skalaren Größen und Listen an den anderen Eingängen bei jedem Aufruf gleichbleiben. Liegen an mehreren Dateneingängen für skalare Größen Listen mit dem gleichen Prüfzeichen an, so werden die Befehle des betreffenden Programmbausteins zur Laufzeit für jedes Element der Listen ausgeführt, wobei die Skalare und Listen an den anderen Eingängen bei jedem Aufruf unverändert bleiben. Ein solches Vorgehen wird auch als inhärente Listenverarbeitung bezeichnet. Skalare Größen an Datenausgängen werden in der Reihenfolge des aufeinanderfolgenden Ausführens der Befehle des Programmbausteins zu neuen Listen zusammengefaßt. Die Listen an den Datenausgängen werden in der Reihenfolge des aufeinanderfolgenden Ausführens der Befehle des Programmsystems zu neuen Listen zusammengefaßt. Die neuen Listen enthalten als Listenelemente wiederum Listen. Die beim Zusammenfassen entstandenen Listen an den Datenausgängen bekommen das gleiche Prüfzeichen, wie die Listen an den Dateneingängen für skalare Größen. Die Bedienperson sollte auf jeden Fall durch einen Warnhinweis auf eine Situation hingewiesen werden, in der eine inhärente Listenverarbeitung durchgeführt wird.
- Liegen an mindestens zwei Dateneingängen für skalare Größen Listen mit unterschiedlichem Prüfzeichen an, so sind folgende Fälle zu unterscheiden:
   a) die Anzahl der Listenelemente in den Listen ist gleich. Das bedeutet, daß die Reihenfolge der Listenelemente unterschiedlich ist. Es wird eine Warnung ausgegeben, da es zum Ausführungszeitpunkt nicht zwingend zu einem Fehler kommt. Die skalaren Größen und Listen an den übrigen Dateneingängen werden wie oben angegeben verarbeitet. Bei allen Prüfzeichen am Ausgang wird der Wert für die Reihenfolge S auf ungültig gesetzt, d.h. es wird der Wert X verwendet.
   b) Die Listen haben eine unterschiedlich Anzahl Listenelemente. Zum Ausführungszeitpunkt kommt es mit Sicherheit zu einem Fehler. Eine inhärente Listenverarbeitung ist hier nicht möglich. Deshalb wird eine Fehlermeldung ausgegeben. Die Prüfzeichen am Ausgang des betreffenden Programmbausteins erhalten als Längenprüfzeichen L den Wert X.

## Patentansprüche

1. Verfahren zum Testen eines Programmsystems (60), bei dem in einem digitalen Datenspeicher gespeicherte Befehle einer Beschreibungssprache den Datenfluß zwischen Programmbausteinen (20a, 50a) des Programmsystems (60) beschreiben, wobei die Programmbausteine (20a, 50a) jeweils mindestens einen Dateneingang (E1b, E2b, E1c, E2c) und mindestens einen Datenausgang (A1b, A1c, A2c) aufweisen, wobei insgesamt mindestens einer der Dateneingänge (E1b, E2b, E1c, E2c) als Dateineingang (62, 64) und mindestens einer der Datenausgänge (A1b, A1c, A2c) als Datenausgang (70) aus dem Programmsystem (60) herausgeführt ist, bei dem
- jeweils ein Vorgabezeichen (VZ) für jeden Dateneingang (E1b, E2b, E1c, E2c) und jeden Datenausgang (A1b, A1c, A2c) der Programmbausteine (20a, 50a) vorgegeben ist, wobei die Vorgabezeichen (VZ) Eigenschaften der den Dateneingängen (E1b, E2b, E1c, E2c) zugeführten Daten oder an den Datenaungängen (A1b, A1c, A2c) ausgegebenen Daten durch Eigenschaftswerte angeben, wobei gleiche Eigenschaften an verschiedenen Daten ein- bzw. Datenausgängen (E1b, E2b, E1c, E2c, A1b, A1c, A2c) in den entsprechenden Vorgabezeichen (VZ) durch gleiche Eigenschaftswerte angegeben werden und
wobei sich die Eigenschaften **dadurch** auszeichnen, dass für sie erst beim Ausführen der Befehle des Programmsystems (60) ein konkreter Wert angegeben werden kann,
- Prüfzeichen (PZ) an den Dateneingängen (62, 64), die aus dem Programmsystem (60) herausgeführt sind, vorgegeben sind, wobei die Prüfzeichen (PZ) die Eigenschaften der beim Ausführen der Programmbausteine (20a, 50a) den Dateneingängen (E1b, E2b, E1c, E2c) zugeführten Daten oder der an den Datenausgängen (A1b, A1c, A2c) ausgegebenen Daten durch Eigenschaftswerte angeben, wobei gleiche Eigenschaften an verschiedenen Daten ein- bzw. Datenausgängen (E1b, E2b, E1c, E2c, A1b, A1c, A2c) in den entsprechenden Prüfzeichen (PZ) durch gleiche Eigenschaftswerte angegeben werden, und
- ein Testprogramm mit den folgenden Schritten durchgeführt wird:
a) für alle Programmbausteine (50a) mit Prüfzeichen an den Dateneingängen (E1c, E2c) werden für die Datenausgänge (A1c, A2c) dieser Programmbausteine (50a) Prüfzeichen (PZ) automatisch vergeben, wobei in den vergebenen Prüfzeichen (PZ) für Datenausgänge (A1c, A2c) der Eigenschaftswert gleich dem entsprechenden Eigenschaftswert im Prüfzeichen (PZ) eines der Dateneingänge (E1c, E2c) gesetzt wird, wenn in den Vorgabezeichen (VZ) dieser Datenausgänge (A1c, A2c) und dieses Dateneingangs (E1c, E2c) die entsprechenden Eigenschaftewerte übereinstimmen und wobei andernfalls in den vergebenen Prüfzeichen (PZ) für alle weiteren Datenausgänge (A1c, A2c) davon abweichende und untereinander unterschiedliche Eigenschaftswerte vergeben werden,
b) Prüfzeichen (PZ), die für Datenausgänge (A1c, A2c) ermittelt wurden, werden als Prüfzeichen (PZ) für die Dateneingänge (E1b, E2b) nachgeschalteter Programmbausteine (20a) übernommen,
c) falls die nachgeschalteten Programmbausteine (20a) mehr als einen Dateneingang (E1b, E2b) aufweisen, wird überprüft, ob die Vorgabezeichen (VZ) än den Dateneingängen (E1b, E2b) gleiche Eigenschaftswerte aufweisen und, falls dem so ist, wird überprüft, ob die Prüfzeichen (PZ) an diesen Dateneingängen (E1b, E2b) ebenfalls gleiche Werte für die entsprechende Eigenschaften aufweisen,
d) es wird, falls die Prüfzeichen (PZ) keine gleichen Eigenschaftswerte aufweisen, ein Hinweis (72) ausgegeben, und,
e) es werden, falls in Schritt d) kein Hinweis (72) ausgegeben wurde, die Schritte a) bis d) wiederholt, bis Prüfzeichen (PZ) für alle weiteren Programmbausteine ermittelt sind.

2. Verfahren nach Anspruch 1,
**dadurch gekennzeichnet,**
**daß** für wenigstens einen Dateneingang (E1c, E2c), der Dateneingang (62, 64) des Programmsystems (60) ist, das Prüfzeichen (PZ) von einer Bedienperson vorgeben wird.

3. Verfahren nach einem der Ansprüche 1 oder 2,
**dadurch gekennzeichnet,**
**daß** Prüfzeichen (PZ) for Dateneingänge (E1c, E2c), die Dateneingänge (62, 64) des Programmsystems (60) sind, die nicht vorgegeben sind, automatisch vorgegeben werden, wobei für verschiedene Däteneingänge (E1c, E2c) verschiedene Prüfzeichen (PZ) vorgegeben werden.

4. Verfahren zum Testen eines Programmsystems (60), bei dem in einem digitalen Datenspeicher gespeicherte Befehle einer Beschreibungssprache den Datenfluß zwischen Programmbausteinen (20a, 50a) des Programmsystems (60) beschreiben, wobei die Programmbaüsteine (20a, 50a) jeweils mindestens einen Dateneingang (E1b, E2b, E1c, E2c) und mindestens einen Datenausgang (A1b, A1c, A2c) aufweisen, wobei insgesamt mindestens einer der Dateneingänge (E1b, E2b, E1c, E2c) als Dateineingang (62, 64) und mindestens einer der Datenausgänge (A1b, A1c, A2c) als Datenausgang (70) aus dem Programmsystem (60) herausgeführt ist, bei dem
- jeweils ein Vorgabezeichen (VZ) für jeden Dateneingang (E1b, E2b, E1c, E2c) und jeden Datenausgang (A1b, A1c, A2c) der Programmbausteine (20a, 50a) festgelegt wird, wobei die Vorgabezeichen (VZ) Eigenschaften der den Dateneingängen (E1b, E2b, E1c, E2c) zugeführten oder an den Datenausgängen (A1b, A1c, A2c) ausgegeben Daten durch Eigenschaftswerte angeben, wobei gleiche Eigenschaften an verschiedenen Daten ein- bzw. Datenausgängen (E1b, E2b, E1c, B2c, A1b, A1c, A2c) in den entsprechenden Vorgabezeichen (VZ) durch gleiche Eigenschaftswerte angegeben werden und wobei sich die Eigenschaften **dadurch** auszeichnen, dass für sie erst beim Ausführen der Befehle des Programmsystems (60) ein konkreter Wert angegeben werden kann,
- Prüfzeichen (PZ) an den Dateneingängen (62, 64), die aus dem Programmsystem (60) herausgeführt sind, vorgegeben sind, wobei die Prüfzeichen (PZ) die Eigenschaften der beim Ausführen der Programmbausteine (20a, 50a) den Dateneingängen (E1b, E2b, E1c, E2c) zugeführten Daten oder der an den Datenausgängen (A1b, A1c, A2c) ausgegebenen Daten durch Eigenschaftswerte angeben, wobei gleiche Eigenschaften an verschiedenen Daten ein- bzw. Datenausgängen (E1b, E2b, E1c, E2c, A1b, A1c, A2c) in den entsprechenden Prüfzeichen (PZ) durch gleiche Eigenschaftswerte angegeben werden, und,
- ein Testprogramm mit den folgenden Schritten durchgeführt wird:
a) für alle Programmbausteine (20a) mit Prüfzeichen an den Datenausgängen (A1b) werden für die Dateneingänge (E1b, E2b) dieser Programmbausteine (20a) Prüfzeichen (PZ), automatisch vergeben, wobei in den vergebenen Prüfzeichen (PZ) für Dateneingänge (E1b, E2b) der Eigenschaftswert gleich dem entsprechenden Eigenschaftswert im Prüfzeichen (PZ) eines der Datenausgänge (A1b) gesetzt wird, wenn in den Vergabezeichen (VZ) dieser Dateneingänge (E1b, E2b) und dieses Datenausgangs (A1b) die entsprechenden Eigenschaftswerte übereinstimmen und wobei andernfalls in den vergebenen Prüfzeichen (PZ) für alle weiteren Dateneingange (E1b, E2b) davon abweichende und untereinander unterschiedliche Eigenschaftswerte vergeben werden,
b) Prüfzeichen (PZ), die für Dateneingänge (E1b, E2b) ermittelt wurden, werden als Prüfzeichen (PZ) für die Datenausgänge (A1c, A2c) vorgeschalteter Programmbausteine (50a) übernommen,
c) falls die vorgeschalteten Programmbausteine (50a) mehr als einen Datenausgang (A1c, A2c) aufweisen, wird überprüft, ob die Vorgabezeichen (VZ) an den Datenausgängen (A1c, A2c) gleiche Eigenschaftswerte aufweisen und, falls dem so ist, wird überprüft, ob die Prüfzeichen (PZ) an diesen Datenäusgängen (A1c, A2c) ebenfalls gleiche Werte für die entsprechende Eigenschaften aufweisen,
d) es wird, falls die Prüfzeichen (PZ) keine gleichen Eigenschaftswerte aufweisen, ein Hinweis (72) ausgegeben, und
e) es werden, falls in Schritt d) kein Hinweis (72) ausgegeben wurde, die Schritte a) bis d) wiederholt, bis Prüfzeichen (PZ) für alle weiteren Programmbausteine ermittelt sind.

5. Verfahren nach Anspruch 4,
**dadurch gekennzeichnet,**
**daß** für wenigstens einen Datenausgang (A1b), der Datenausgang (70) des Programmsystems (60) ist, das Prüfzeichen (PZ) von einer Bedienperson vorgeben wird.

6. Verfahren nach einem der Ansprüche 4 oder 5,
**dadurch gekennzeichnet,**
**daß** Prüfzeichen (PZ) für Datenausgänge (A1b), die Datenausgänge (70) des Programmsystems (60) sind, die nicht vorgegeben sind, automatisch vorgegeben werden, wobei für verschiedene Datenausgänge (A1b) verschiedene Prüfzeichen (PZ) vorgegeben werden.

7. Verfahren nach einem der Ansprüche 1 bis 6,
**dadurch gekennzeichnet,**
**daß** ein betreffendes Prüfzeichen nur ermittelt wird, wenn beim Prüfen kein Fehlersignal bei Prüfzeichen (PZ) aufgetreten ist; die zum Ermitteln des betreffenden Prüfzeichens (PZ) verwendet werden.

8. Verfahren nach einem der Ansprüche 1 bis 7,
**dadurch gekennzeichnet,**
**daß** die Daten Listen mit mehreren Listenelementen des gleichen Datentyps sind, und daß die bezeichnete Eigenschaft die Anzahl (L) der Listenelemente ist.

9. Verfahren nach einem der Ansprüche 1 bis 8,
**dadurch gekennzeichnet,**
**daß** die Daten Listen mit mehreren Listenelementen des gleichen Datentyps sind, und daß die bezeichnete Eigenschaft die Aufrechterhaltung der richtigen Zuordnung (S) der Listenelemente zweier Listen zueinander betrifft oder daß die bezeichnete Eigenschaft die Anordnung (S) der Listenelemente innerhalb der Liste kennzeichnet.

10. Verfahren nach einem der Ansprüche 8 oder 9,
**dadurch gekennzeichnet,**
**daß** Regeln vorgegeben sind, die festlegen, wie zu verfahren ist, wenn an Stelle einer Liste an einem Dateneingang ein einzelnes Datum oder ein einzelner Datensatz bearbeitet werden soll, das bzw. der vom Datentyp der Listenelemente der Liste ist, und/oder wie zu verfahren ist, wenn an Stelle eines einzelnen Datums oder eines einzelnen Datensatzes eine Liste bearbeitet werden soll, die Listenelemente vom Datentyp des Datums oder vom Datentyp des Datensatzes enthält.

11. Verfahren nach einem der Ansprüche 1 bis 10,
**dadurch gekennzeichnet,**
**daß** die Befehle der Befehlssprache ausgehend von einer bildlichen Darstellung des Datenflusses im Programmsystem (60) erzeugt werden.

12. Verfahren nach einem der Ansprüche 1 bis 11,
**dadurch gekennzeichnet,**
**daß** das Verfahren in einer Programmierumgebung oder in einem Planungsprogramm für Fertigungsprozesse verwendet wird.

13. Programm mit einer durch den Prozessor einer Datenverarbeitungsanlage ausführbaren Befehlsfolge,
**dadurch gekennzeichnet,**
**daß** die Datenverarbeitungsanlage beim Ausführen der Befehlefolge veranlaßt wird, das in einem der Ansprüche 1 bis 12 angegebene Verfahren auszuführen.

## Claims

1. Method for testing a program system (60) in which instructions in a description language which are stored in a digital data memory describe the flow of data between program modules (20a, 50a) of the program system (60), the program modules (20a, 50a) each having at least one data input (E1b, E2b, E1c, E2c) and at least one data output (A1b, A1c, A2c), where, in total, at least one of the data inputs (E1b, E2b, E1c, E2c) is routed out of the program system (60) as the data input (62, 64) and at least one data output (A1b, A1c, A2c) is routed out of the program system (60) as the data output (70), in which
- a default symbol (VZ) is respectively predefined for each data input (E1b, E2b, E1c, E2c) and each data output (A1b, A1c, A2c) of the program modules (20a, 50a), the default symbols (VZ) using property values to indicate properties of the data supplied to the data inputs (E1b, E2b, E1c, E2c) or of data output at the data outputs (A1b, A1c, A2c), the same property values being used to indicate the same properties at different data inputs and data outputs (E1b, E2b, E1c, E2c, A1b, A1c, A2c) in the corresponding default symbols (VZ), and the properties being distinguished by the fact that a specific value can be specified for them only when executing the instructions of the program system (60),
- test symbols (PZ) are predefined at the data inputs (62, 64) which are routed out of the program system (60), the test symbols (PZ) using property values to indicate the properties of the data supplied to the data inputs (E1b, E2b, E1c, E2c) during execution of the program modules (20a, 50a) or of the data output at the data outputs (A1b, A1c, A2c), the same property values being used to indicate the same properties at different data inputs and data outputs (E1b, E2b, E1c, E2c, A1b, A1c, A2c) in the corresponding test symbols (PZ), and
- a test program having the following steps is carried out:
a) for all program modules (50a) having test symbols at the data inputs (E1c, E2c), test symbols (PZ) are automatically allocated for the data outputs (A1c, A2c) of these program modules (50a), the property value in the allocated test symbols (PZ) for data outputs (A1c, A2c) being set to be equal to the corresponding property value in the test symbol (PZ) of one of the data inputs (E1c, E2c) if the corresponding property values match in the default symbols (VZ) of these data outputs (A1c, A2c) and this data input (E1c, E2c), and property values which differ therefrom and are different from one another otherwise being allocated in the allocated test symbols (PZ) for all further data outputs (A1c, A2c),
b) test symbols (PZ) which have been determined for data outputs (A1c, A2c) are adopted as test symbols (PZ) for the data inputs (E1b, E2b) of downstream program modules (20a),
c) if the downstream program modules (20a) have more than one data input (E1b, E2b), a check is carried out in order to determine whether the default symbols (VZ) at the data inputs (E1b, E2b) have the same property values and, if this is the case, a check is carried out in order to determine whether the test symbols (PZ) at these data inputs (E1b, E2b) likewise have the same values for the corresponding properties,
d) if the test symbols (PZ) do not have the same property values, an indication (72) is output, and
e) if an indication (72) has not been output in step d), steps a) to d) are repeated until test symbols (PZ) have been determined for all further program modules.

2. Method according to Claim 1,
**characterized in that**
the test symbol (PZ) is predefined by an operator for at least one data input (E1c, E2c) which is the data input (62, 64) of the program system (60).

3. Method according to either of Claims 1 and 2,
**characterized in that**
test symbols (PZ) which have not been predefined are automatically predefined for data inputs (E1c, E2c) which are data inputs (62, 64) of the program system (60), different test symbols (PZ) being predefined for different data inputs (E1c, E2c).

4. Method for testing a program system (60) in which instructions in a description language which are stored in a digital data memory describe the flow of data between program modules (20a, 50a) of the program system (60), the program modules (20a, 50a) each having at least one data input (E1b, E2b, E1c, E2c) and at least one data output (A1b, A1c, A2c), where, in total, at least one of the data inputs (E1b, E2b, E1c, E2c) is routed out of the program system (60) as the data input (62, 64) and at least one data output (A1b, A1c, A2c) is routed out of the program system (60) as the data output (70), in which
- a default symbol (VZ) is respectively defined for each data input (E1b, E2b, E1c, E2c) and each data output (A1b, A1c A2c) of the program modules (20a, 50a), the default symbols (VZ) using property values to indicate properties of the data supplied to the data inputs (E1b, E2b, E1c, E2c) or of data output at the data outputs (A1b, A1c, A2c), the same property values being used to indicate the same properties at different data inputs and data outputs (E1b, E2b, E1c, E2c, A1b, A1c, A2c) in the corresponding default symbols (VZ), and the properties being distinguished by the fact that a specific value can be specified for them only when executing the instructions of the program system (60),
- test symbols (PZ) are predefined at the data inputs (62, 64) which are routed out of the program system (60), the test symbols (PZ) using property values to indicate the properties of the data supplied to the data inputs (E1b, E2b, E1c, E2c) during execution of the program modules (20a, 50a) or of the data output at the data outputs (A1b, A1c, A2c), the same property values being used to indicate the same properties at different data inputs and data outputs (E1b, E2b, E1c, E2c, A1b, A1c, A2c) in the corresponding test symbols (PZ), and
- a test program having the following steps is carried out:
a) for all program modules (20a) having test symbols at the data outputs (A1b), test symbols (PZ) are automatically allocated for the data inputs (E1b, E2b) of these program modules (20a), the property value in the allocated test symbols (PZ) for data inputs (E1b, E2b) being set to be equal to the corresponding property value in the test symbol (PZ) of one of the data outputs (A1b) if the corresponding property values match in the default symbols (VZ) of these data inputs (E1b, E2b) and this data output (A1b), and property values which differ therefrom and are different from one another otherwise being allocated in the allocated test symbols (PZ) for all further data inputs (E1b, E2b),
b) test symbols (PZ) which have been determined for data inputs (E1b, E2b) are adopted as test symbols (PZ) for the data outputs (A1c, A2c) of upstream program modules (50a),
c) if the upstream program modules (50a) have more than one data output (A1c, A2c), a check is carried out in order to determine whether the default symbols (VZ) at the data outputs (A1c, A2c) have the same property values and, if this is the case, a check is carried out in order to determine whether the test symbols (PZ) at these data outputs (A1c, A2c) likewise have the same values for the corresponding properties,
d) if the test symbols (PZ) do not have the same property values, an indication (72) is output, and
e) if an indication (72) has not been output in step d), steps a) to d) are repeated until test symbols (PZ) have been determined for all further program modules.

5. Method according to Claim 4,
**characterized in that**
the test symbol (PZ) is predefined by an operator for at least one data output (A1b) which is the data output (70) of the program system (60).

6. Method according to either of Claims 4 and 5,
**characterized in that**
test symbols (PZ) which have not been predefined are automatically predefined for data outputs (A1b) which are data outputs (70) of the program system (60), different test symbols (PZ) being predefined for different data outputs (A1b).

7. Method according to one of Claims 1 to 6,
**characterized in that**
a relevant test symbol is determined only if an error signal has not occurred during testing in test symbols (PZ) which are used to determine the relevant test symbol (PZ).

8. Method according to one of Claims 1 to 7,
**characterized in that**
the data are lists containing a plurality of list elements of the same data type, and **in that** the property described is the number (L) of list elements.

9. Method according to one of Claims 1 to 8,
**characterized in that**
the data are lists containing a plurality of list elements of the same data type, and **in that** the property described relates to the maintenance of the correct assignment (S) of the list elements in two lists to one another, or **in that** the property described denotes the arrangement (S) of the list elements inside the list.

10. Method according to either of Claims 8 and 9,
**characterized in that**
rules are predefined, which rules define how to proceed if, instead of a list, an individual data item or an individual data record which is of the data type of the list elements in the list is intended to be processed at a data input, and/or how to proceed if, instead of an individual data item or an individual data record, a list containing list elements of the data type of the data item or of the data type of the data record is intended to be processed.

11. Method according to one of Claims 1 to 10,
**characterized in that**
the instructions in the instruction language are generated on the basis of a pictorial representation of the flow of data in the program system (60).

12. Method according to one of Claims 1 to 11,
**characterized in that**
the method is used in a programming environment or in a planning program for production processes.

13. Program having an instruction sequence which can be executed by the processor of a data processing system,
**characterized in that**,
when executing the instruction sequence, the data processing system is caused to carry out the method specified in one of Claims 1 to 12.

## Revendications

1. Procédé pour tester un système de programme (60),
dans lequel des instructions, stockées dans une mémoire de données numériques, d'un langage de description décrivent le flux de données entre des composants de programme (20a, 50a) du système de programme (60), les composants de programme (20a, 50a) présentant chacun au moins une entrée de données (E1b, E2b, E1c, E2c) et au moins une sortie de données (A1b, A1c, A2c), globalement au moins l'une des entrées de données (E1b, E2b, E1c, E2c) en tant qu'entrée de données (62, 64) et au moins l'une des sorties de données (A1b, A1c, A2c) en tant que sortie de données (70) étant guidées à la sortie du système de programme (60), dans lequel
- à chaque fois un caractère de spécification (VZ) est prédéfini pour chaque entrée de données (E1b, E2b, E1c, E2c) et chaque sortie de données (A1b, A1c A2c) des composants du programme (20a, 50a), les caractères de spécification (VZ) indiquant des propriétés des données amenées aux entrées de données (E1b, E2b, E1c, E2c) ou des données sorties sur les sorties de données (A1b, A1c A2c) par des valeurs de propriété, des propriétés identiques étant indiquées sur différentes entrées ou sorties de données (E1b, E2b, E1c, E2c, A1b, A1c, A2c) dans les caractères de spécification (VZ) correspondants par des valeurs de propriété identiques et les propriétés **se caractérisant par le fait qu'**une valeur concrète ne peut être indiquée que lors de l'exécution des instructions du système de programme (60),
- des caractères de contrôle (PZ) sont prédéfinis sur les entrées de données (62; 64) qui sont guidées à la sortie du système de programme (60), les caractères de contrôle (PZ) indiquant les propriétés des données amenées aux entrées de données (E1b, E2b, E1c, E2c) lors de l'exécution des composants de programme (20a, 50a) ou des données sorties sur les sorties de données (A1b, A1c, A2c) par des valeurs de propriété, des propriétés identiques étant indiquées sur différentes entrées ou sorties de données (E1b, E2b, E1c, E2c, A1b, A1c, A2c) dans les caractères de contrôle (PZ) correspondants par des valeurs de propriété identiques, et
- un programme test est mis en oeuvre avec les étapes suivantes :
a) pour tous les composants de programme (50a) avec des caractères de contrôle sur les entrées de données (E1c, E2c), des caractères de contrôle (PZ) sont attribués automatiquement pour les sorties de données (A1c, A2c) de ces composants de programme (50a), la valeur de propriété dans les caractères de contrôle (PZ) attribués pour des sorties de données (A1c, A2c) étant assimilée à la valeur de propriété correspondante dans le caractère de contrôle (PZ) de l'une des entrées de données (E1c, E2c) lorsque les valeurs de propriété correspondantes coïncident dans les caractères d'attribution (VZ) de ces sorties de données (A1c, A2c) et de cette entrée de données (E1c, E2c) et des valeurs de propriété divergentes par rapport à ces valeurs et différentes entre elles étant attribuées autrement dans les caractères de contrôle (PZ) attribués pour toutes les autres sorties de données (A1c, A2c),
b) des caractères de contrôle (PZ), qui ont été déterminés pour des sorties de données (A1c, A2c), sont pris en charge sous forme de caractères de contrôle (PZ) pour les entrées de données (E1b, E2b) de composants de programme (20a) montés en aval,
c) si les composants de programme (20a) montés en aval présentent plus d'une entrée de données (E1b, E2b), on vérifie si les caractères de spécification (VZ) sur les entrées de données (E1b, E2b) présentent des valeurs de propriété identiques et, selon le cas, on vérifie si les caractères de programme (PZ) sur ces entrées de données (E1b, E2b) présentent également des valeurs identiques pour les propriétés correspondantes,
d) si les caractères de contrôle (PZ) ne présentent pas des valeurs de propriété identiques, on édite une information (72), et,
e) si aucune information (72) n'a été éditée lors de l'étape d), les étapes a) à d) sont répétées jusqu'à ce que des caractères de contrôle (PZ) soient déterminés pour tous les autres composants de programme.

2. Procédé selon la revendication 1, **caractérisé en ce que,** pour au moins une entrée de données (E1c, E2c), qui est l'entrée de données (62, 64) du système de programme (60), le caractère de contrôle (PZ) est prédéfini par un opérateur.

3. Procédé selon l'une quelconque des revendications 1 ou 2, **caractérisé en ce que** des caractères de contrôle (PZ) sont prédéfinis automatiquement pour des entrées de données (E1c, E2c), qui sont des entrées de données (62, 64) du système de programme (60) qui ne sont pas prédéfinies, différents caractères de contrôle (PZ) étant prédéfinis pour différentes entrées de données (E1c, E2c).

4. Procédé pour tester un système de programme (60), dans lequel des instructions, mémorisées dans une mémoire de données numériques, d'un langage de description décrivent le flux de données entre des composants de programme (20a, 50a) du système de programme (60), les composants de programme (20a, 50a) présentant chacun au moins une entrée de données (E1b, E2b, E1c, E2c) et au moins une sortie de données (A1b, A1c, A2c), au moins l'une des entrées de données (E1b, E2b, E1c, E2c) comme entrée de donnée (62, 64) et au moins l'une des sorties de données (A1b, A1c, A2c) comme sortie de données (70) étant guidées globalement à la sortie du système de programme (60), dans lequel
- à chaque fois un caractère de spécification (VZ) est défini pour chaque entrée de données (E1b, E2b, E1c, E2c) et chaque sortie de données (A1b, A1c, A2c) des composants de programme (20a, 50a), les caractères de spécification (VZ) indiquant des propriétés des données amenées aux entrées de données (E1b, E2b, E1c, E2c) ou éditées sur des sorties de données (A1b, A1c, A2c) par des valeurs de propriété, des propriétés identiques étant indiquées sur différentes entrées ou sorties de données (E1b, E2b, E1c, E2c, A1b, A1c, A2c) dans les caractères de spécification (VZ) correspondants par des valeurs de propriété identiques et les propriétés **se caractérisant par le fait qu'**une valeur concrète peut être indiquée pour elles uniquement lors de l'exécution des instructions du système de programme (60),
- des caractères de contrôle (PZ) sont prévus sur les entrées de données (62, 64) qui sont guidées à la sortie du système de programme (60), les caractères de contrôle (PZ) indiquant les propriétés des données amenées aux entrées de données (E1b, E2b, E1c, E2c) lors de l'exécution des composants de programme (20a, 50a) ou des données éditées sur les sorties de données (A1b, A1c, A2c) par des valeurs de propriété, des propriétés identiques étant indiquées sur différentes entrées ou sorties de données (E1b, E2b, E1c, E2c, A1b, A1c, A2c) dans les caractères de contrôle (PZ) correspondants par des valeurs de propriété identiques, et
- un programme test est mis en oeuvre avec les étapes suivantes :
a) pour tous les composants de programme (20a) avec des caractères de contrôle sur les sorties de données (A1b), des caractères de contrôle (PZ) sont attribués automatiquement pour les entrées de données (E1b, E2b) de ces composants de programme (20a), la valeur de propriété dans les caractères de contrôle prédéfinis (PZ) pour des entrées de données (E1b, E2b) étant assimilée à la valeur de propriété correspondante dans le caractère de contrôle (PZ) de l'une des sorties de données (A1b) si les valeurs de propriété correspondantes coïncident dans les caractères de spécification (VZ) de ces entrées de données (E1b, E2b) et de cette sortie de données (A1b) et des valeurs de propriété différentes par rapport aux valeurs précédentes et différentes entre elles étant prédéfinies autrement dans les caractères de contrôle (PZ) attribués pour toutes les autres entrées de données (E1b, E2b),
b) des caractères de contrôle (PZ), qui ont été déterminés pour des entrées de données (E1b, E2b), sont pris en charge comme caractères de contrôle (PZ) pour les sorties de données (A1c A2c) de composants de programme (50a) montés en amont,
c) si les composants de programme (50a) montés en amont présentent plus d'une sortie de données (A1c, A2c), on vérifie si les caractères de spécification (VZ) sur les sorties de données (A1c, A2c) présentent des valeurs de propriété identiques et, si c'est le cas, on vérifie si les caractères de contrôle (PZ) sur ces sorties de données (A1c, A2c) présentent également des valeurs identiques pour les propriétés correspondantes,
d) une information (72) est éditée si les caractères de contrôle (PZ) ne présentent pas des valeurs de propriété identiques, et,
e) si aucune information (72) n'a été éditée lors de l'étape d), les étapes a) à d) sont répétées jusqu'à ce que des caractères de contrôle (PZ) soient déterminés pour tous les autres composants de programme.

5. Procédé selon la revendication 4, **caractérisé en ce que** le caractère de contrôle (PZ) est prédéfini par un opérateur pour au moins une sortie de données (A1b) qui est la sortie de données (70) du système de programme (60).

6. Procédé selon l'une quelconque des revendications 4 ou 5, **caractérisé en ce que** le caractère de contrôle (PZ) s'attribue automatiquement pour les sorties de données (A1b) qui sont des sorties de données (70) du système de programme (60) qui ne sont pas prédéfinies, différents caractères de contrôle (PZ) étant prédéfinis pour différentes sorties de données (A1b).

7. Procédé selon l'une quelconque des revendications 1 à 6, **caractérisé en ce qu'**un caractère de contrôle concerné n'est déterminé que si, lors du contrôle, aucun signal d'erreur n'est apparu dans le cas de caractères de contrôle (PZ) qui sont utilisés pour déterminer le caractère de contrôle (PZ) concerné.

8. Procédé selon l'une quelconque des revendications 1 à 7, **caractérisé en ce que** les données sont des listes avec plusieurs éléments de liste du même type de données et **en ce que** la propriété désignée est le nombre (L) des éléments de liste.

9. Procédé selon l'une quelconque des revendications 1 à 8, **caractérisé en ce que** les données sont des listes avec plusieurs éléments de liste du même type de donnée et **en ce que** la propriété désignée concerne le maintien de l'attribution (S) correcte des éléments de liste de deux listes l'une par rapport à l'autre ou **en ce que** la propriété désignée caractérise l'agencement (S) des éléments de liste à l'intérieur de la liste.

10. Procédé selon l'une quelconque des revendications 8 ou 9, **caractérisé en ce que** des variables sont prédéfinies qui définissent comment on doit procéder lorsque, à la place d'une liste, on doit traiter sur une entrée de données une donnée individuelle ou un ensemble de données individuel qui est du type de données des éléments de la liste et/ou comment on doit procéder lorsque, à la place d'une donnée individuelle ou d'un ensemble de données individuel, on doit traiter une liste qui contient des éléments de liste du type de données de la donnée ou du type de données de l'ensemble de données.

11. Procédé selon l'une quelconque des revendications 1 à 10, **caractérisé en ce que** les instructions de langage d'instruction sont générées à partir d'une représentation en image du flux de données dans le système de programme (60).

12. Procédé selon l'une quelconque des revendications 1 à 11, **caractérisé en ce que** le procédé est utilisé dans un environnement de programmation ou dans un programme de planification pour des processus de fabrication.

13. Programme avec une séquence d'instructions pouvant être exécutée par le processeur d'une installation de traitement de données, **caractérisé en ce que** l'installation de traitement de données reçoit l'ordre, lors de l'exécution de la séquence d'instructions, de mettre en oeuvre le procédé indiqué dans l'une quelconque des revendications 1 à 12.
